# FASCICULE DE BREVET EUROPEEN

(11) **EP 3 482 193 B1**
(45) Date de publication et mention de la délivrance du brevet: **01.06.2022**
(21) Numéro de dépôt: 17745822.1
(22) Date de dépôt: 03.07.2017
(51) Int. Cl.: G01B 11/30, G01N 21/90, G01N 21/88

(54) **PROCEDE, DISPOSITIF ET LIGNE D'INSPECTION POUR LA DETERMINATION D'UNE BAVURE A L'ENDROIT D'UN BORD INTERNE D'UNE SURFACE DE BAGUE**
PRÜFVERFAHREN, VORRICHTUNG UND VERFAHREN ZUR ERKENNUNG EINES GRATES AN EINEM INNENRAND EINER KRAGENFLÄCHE
INSPECTION METHOD, DEVICE AND LINE FOR DETECTING A BURR ON AN INTERNAL EDGE OF A COLLAR SURFACE

(30) Priorité: 06.07.2016 FR 1656462
(43) Date de publication de la demande: 15.05.2019
(73) Titulaire: Tiama, 69390 Vourles (FR)
(72) Inventeur: FAYOLLE, Lubin, 69530 Brignais (FR); LECONTE, Marc, 69700 Loire Sur Rhone (FR); OLLIVIER, Michel, 35690 Acigne (FR)
(74) Mandataire: Cabinet Beau de Loménie
(86) Numéro de dépôt international: PCT/FR2017/051808
(87) Numéro de publication internationale: WO 2018/007745

(56) Documents cités:
- EP-A1- 1 079 228
- EP-A2- 0 873 510
- WO-A1-2016/059343
- FR-A1- 2 896 041
- JP-A- 2009 150 767
- US-A- 5 699 152
- US-A1- 2006 051 086
- US-A1- 2009 066 944

## Description

L'invention concerne le domaine de l'inspection des récipients, notamment en verre, et plus précisément l'inspection de la surface de bague de tels récipients pour y déceler la présence d'une éventuelle bavure à l'endroit d'un bord interne de la surface de bague.

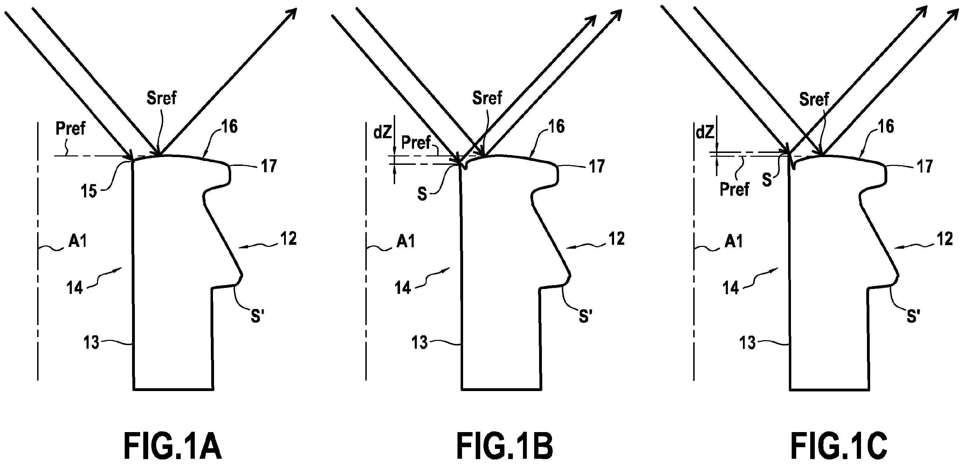

On a illustré sur les **Figures 1A** à **1C****,** en section par un plan radial, uniquement la partie supérieure du col d'un récipient **14,** qui présente une bague **12.** Seule une moitié de la section est illustrée. Un récipient **14** est défini comme un contenant creux définissant un volume intérieur qui est fermé sur toute sa périphérie volumique sauf au niveau d'une bague supérieure **12** ouverte à une extrémité.

Par commodité, et uniquement à titre de définition arbitraire, il sera en effet considéré que le récipient **14** comporte un axe central théorique **A1,** défini comme étant l'axe central théorique de sa bague **12.** Il sera aussi considéré arbitrairement que la bague est agencée à l'extrémité supérieure du récipient. Ainsi, dans le présent texte, les notions de haut, bas, supérieur et inférieur ont une valeur relative correspondant à l'orientation du dispositif selon l'invention et du récipient **14** tels que représentés sur les figures. Toutefois, on comprend que l'invention pourrait être mise en œuvre avec une orientation absolue indifférente dans l'espace, dans la mesure où les différents composants restent agencés avec le même agencement relatif.

La bague **12** du récipient est cylindrique de révolution autour de l'axe **A1.** Le corps du récipient, non représenté, peut être aussi un volume de révolution ou non. La bague **12** est reliée par son extrémité inférieure (non représentée) au col du récipient, tandis que son autre extrémité libre, dite supérieure par choix arbitraire dans le cadre de la présente description, se termine par une surface de bague **16.**

La surface de bague **16** est la surface supérieure ou l'arête supérieure de la bague **12** du récipient, la bague étant, dans le cas d'une bouteille, la partie supérieure renflée du col du récipient. De forme de révolution autour de l'axe central théorique de la bague **12**, notamment de forme circulaire, annulaire ou partiellement toroïdale, la surface de bague **16** est plus ou moins étendue selon une direction radiale à l'axe central théorique **A1.** En théorie, cette surface est plane dans un plan perpendiculaire à l'axe central théorique, en ce sens qu'elle présente au moins une ligne de contact continue sur 360° autour de l'axe avec ce plan, et elle est parfaitement circulaire. Tout en étant plane au sens ci-dessus, son profil radial, i.e. en section par un plan radial contenant l'axe central théorique, peut avoir des formes différentes : le profil peut être plat, arrondi, en V inversé, etc.

Dans l'exemple illustré à la **Fig. 1A****,** la surface de bague **16** présente un profil radial bombé, convexe, entre un bord interne **15** et un bord externe **17.** Le bord interne **15** sera considéré comme étant à l'intersection de la surface de bague **16** et d'une surface interne **13** de la bague du récipient, dont l'orientation générale est proche de celle de l'axe **A1** du récipient **14.**

Parmi les défauts que l'on peut trouver sur une surface de bague, l'invention vise à détecter les défauts de type « bavure » qui, s'ils sont présents, se situent à l'endroit du bord interne **15** de la surface de bague **16.** Ces défauts de type bavure sont aussi appelés « remontées de bague » ou « overpress ». Une bavure se présente sous la forme d'un défaut du profil radial de la surface de bague en section par un plan radial, ce défaut étant situé à l'endroit du bord interne **15** de la surface de bague **16.** Généralement, un tel défaut de type bavure n'est pas ponctuel, donc pas contenu dans un plan radial unique, mais s'étend sur un arc de cercle autour de l'axe théorique **A1** de la surface de bague **16,** généralement sur au moins 1° degré d'angle autour de cet axe.

Un défaut de type bavure se caractérise par une hauteur anormale selon la direction de l'axe théorique de la surface de bague. Cette hauteur peut être appréciée par rapport à la hauteur, selon la direction de l'axe théorique de la surface de bague, d'une ligne circulaire qui est l'intersection de la surface de bague **16** avec un plan de référence perpendiculaire à l'axe théorique **A1** de la surface de bague. On peut définir comme tel plan de référence, le plan **PRef** de la **Fig. 1A** qui est perpendiculaire à l'axe théorique **A1** et qui contient un point particulier **Sref** de la surface de bague **16.** Ce point particulier peut être par exemple le point le plus haut de la surface de bague **16** selon la direction de l'axe théorique **A1.** Alternativement, ce point particulier peut être un point en lequel la surface de bague présente une normale formant un angle prédéterminé par rapport à la direction de l'axe central théorique.

On a illustré sur les **Figs. 1B** et **1C** deux exemples de surface de bague **16,** qui présentent, au niveau du bord interne **15** de la surface de bague, un défaut de type bavure. On voit dans les deux cas que ce défaut résulte en la formation, à l'endroit du bord interne **15,** d'un pic localisé de matière qui est encadré radialement vers l'extérieur par une dépression dans le profil de la surface de bague, et radialement vers l'intérieur par la surface interne **13** de la bague **12.** Il est généralement admis qu'un défaut de type bavure s'étend selon un arc de cercle autour de l'axe théorique **A1.** Dans les exemples illustrés, le défaut peut être caractérisé par un point sommital, ou une ligne sommitale **S** qui représente l'extrémité supérieure de la bavure selon la direction de l'axe théorique **A1.** Dans un plan radial, on peut ainsi définir une hauteur caractéristique d'un défaut de type bavure en relevant, dans ce plan radial, la distance **dZ** entre le point sommital **S** et un plan de référence, par exemple le plan **Pref** tel que défini plus haut, ce qui équivaut à la différence de hauteur selon la direction de l'axe théorique **A1** entre le point particulier **Sref** de la surface de bague et le point sommital **S** de la bavure.

Dans l'exemple de la **Fig. 1B****,** le point sommital **S** de la bavure est situé en-dessous du plan de référence **Pref.** Dans l'exemple illustré à la **Fig. 1C****,** le point sommital **S** de la bavure est situé au-dessus du plan de référence **Pref.**

Divers procédés et dispositifs ont déjà été proposés pour inspecter des récipients afin d'y déterminer la présence ou non d'un défaut de type bavure tel que défini ci-dessus.

Le document US-4.811.251 et le document WO-2008/129650 décrivent un procédé de détection de bavure. Dans ces dispositifs et ces procédés, la surface de bague est analysée selon un plan radial, et il est nécessaire de faire tourner le récipient à 360° pour faire une analyse complète de la surface. Un système d'éclairage comprend une source lumineuse centrale qui permet d'éclairer localement la surface de bague selon une direction qui s'écarte de l'axe au niveau de l'incidence des rayons sur la surface de bague. L'utilisation d'un tel dispositif nécessite un temps d'inspection relativement important puisqu'il nécessite des prises de vues successives au fur et à mesure que le récipient à inspecter est entraîné en rotation autour de son axe, l'axe du récipient restant immobile par rapport au dispositif d'inspection.

De plus, un tel dispositif, qui impose une rotation du récipient autour de son axe, n'est pas réellement utilisable pour une inspection en ligne des récipients lorsque ceux-ci sont en défilement, par exemple dans une ligne d'inspection, de fabrication, de transport, de traitement ou de conditionnement. En effet, cette contrainte impose l'introduction du récipient dans un poste de contrôle ou station d'inspection, sa mise en rotation, le contrôle durant plus d'un tour, l'arrêt de la rotation, l'extraction du poste et remise en ligne. De plus, les machines de manutention nécessaires pour introduire et extraire le récipient du poste de contrôle ont des coûts élevés d'acquisition et d'exploitation. Le document US-0.878.705 décrit un autre de ces dispositifs d'inspection qui nécessite une rotation du récipient.

Le document FR-2.884.611 propose d'utiliser plusieurs caméras, chaque camera observant un secteur angulaire particulier de la bague. L'éclairage est produit par une source de lumière de révolution centrée sur l'axe. Cette solution présente l'inconvénient d'utiliser plusieurs capteurs d'image coûteux, et ne fournit pas d'enseignement sur la détection des bavures. De plus, les différentes caméras délivrent chacune seulement une image partielle de la surface de bague.

C'est pourquoi la plupart des systèmes comportent de préférence une seule caméra d'axe optique centré sur l'axe central théorique des bagues, réalisant une image bidimensionnelle directe de la surface de bague. Tous ces systèmes en translation permettent l'inspection à grande vitesse grâce à l'acquisition d'une seule image sur des articles en translation à haute cadence, les vitesses de déplacement pouvant atteindre 1 m/s.

Le document US-2001-048524 présente une solution dans laquelle l'éclairage est dédié à la mise en évidence de défauts de type fil sur bague, au moyen d'un éclairage tangentiel. Il n'est pas adapté à la visualisation des bavures. Le document US-2004-150815 présente une solution d'éclairage dans laquelle un éclairage rasant directif est ajouté à un éclairage en dôme diffus, et dédié à la mise en évidence des bavures.

Le document FR-2.846.422 propose de combiner plusieurs éclairages dédiés à l'observation de différents défauts sur la surface de bague. La caméra couleur est centrée sur l'axe optique. Un des éclairages, centripète et rasant, illumine la bague dans le but de révéler des bavures internes.

Malgré ces efforts, ces systèmes d'inspection à haute cadence ne sont pas aptes à différencier les bavures en fonction de leur hauteur caractéristique, ou de les distinguer d'un bord interne présentant une arête vive mais brillante sous l'éclairage proposé.

Par ailleurs, il apparaît un besoin de distinguer les petites bavures afin d'assurer une plus grande qualité, sans faire l'erreur de la confondre avec des reflets produits par d'autres éléments du récipient, par exemple par des arêtes marquées de la bague ou par des filets présents sur la bague. Aucun des systèmes précités n'est apte à fournir cette discrimination.

Dans le domaine plus large des machines et procédés d'inspection de récipients, destinés à l'identification d'autres types de défauts, notamment de défauts agencés sur une surface cylindrique externe de la bague, il a déjà été proposé des systèmes optiques, notamment des miroirs coniques annulaires, qui permettent d'observer la bague selon un champ d'observation périphérique qui observe la bague selon des rayons d'observations radiaux contenus dans des plans radiaux contenant l'axe central théorique **A1,** qui sont répartis à 360° autour de l'axe central théorique, le champ d'observation présentant un angle d'élévation d'observation déterminé par rapport à un plan perpendiculaire à l'axe de la bague. De tels dispositifs sont par exemple décrits dans les documents EP-0.047.936, US-4.758.084, US-4.959.538, US-5.661.294, EP-0.873.510, EP-1.606.579, WO2016059343, US-5.699.152, US-4,914,289 ou US-2009/066944.

Le document WO-2008/050067 décrit un dispositif permettant d'observer une zone à inspecter d'un récipient sous plusieurs angles de visée afin de détecter des défauts réfléchissant la lumière dans une direction préférentielle, qui ne sont donc souvent observables que dans une seule direction d'observation.

L'invention a donc pour but de proposer un dispositif et un procédé d'inspection qui soient compatibles avec une inspection en ligne des récipients, donc à haute cadence, et qui permette de déterminer de manière fiable la présence ou non d'un défaut de type bavure à l'endroit du bord interne de la surface de bague.

Dans ce but, l'invention propose un procédé de détermination de la présence d'une bavure de verre à l'endroit d'un bord interne d'une surface de bague d'une bague d'un récipient, la surface de bague ayant comme géométrie théorique une surface de révolution autour d'un axe central théorique, tel que défini par la revendication 1.

Selon d'autre caractéristiques, optionnelles, de l'invention, prises seules ou en combinaison :
- L'angle d'élévation d'observation peut être modifié en remplaçant au moins un composant du système optique.
- Le procédé peut comprendre l'observation de la surface de bague, ainsi que du bord interne de la surface de bague, par au-dessus, par un système optique, selon un deuxième champ d'observation périphérique qui observe la bague selon des seconds rayons d'observation radiaux qui sont contenus dans des plans radiaux contenant l'axe central théorique, qui sont répartis à 360° autour de l'axe central théorique, le deuxième champ d'observation périphérique ayant un deuxième angle d'élévation d'observation par rapport à un plan perpendiculaire à l'axe central théorique, mais différent du premier angle d'élévation d'observation, de manière à recueillir sur le même capteur photoélectrique bidimensionnel, dans une deuxième zone annulaire du capteur, pour former une deuxième zone d'image numérique bidimensionnelle :
   o certains des rayons lumineux incidents réfléchis selon le deuxième champ d'observation périphérique par la surface de bague, formant, dans ladite deuxième zone d'image, un cercle principal,
   o et, éventuellement, des rayons réfléchis selon le deuxième champ d'observation périphérique par le bord interne de la surface de bague ou par une bavure à l'endroit du bord interne, formant dans ladite deuxième zone d'image, au moins un arc de cercle secondaire, concentrique au cercle principal, et décalé radialement par rapport à celui-ci ;
      et le procédé peut comprendre :
      ^{∗} la recherche, dans ladite deuxième zone d'image, du cercle principal,
      ^{∗} la recherche, dans ladite deuxième zone d'image, d'un éventuel arc de cercle secondaire concentrique au cercle principal et décalé radialement par rapport à celui-ci.
- Le procédé peut comporter :
   ^{∗} l'observation simultanée, par le système optique, du premier champ d'observation périphérique ayant le premier angle d'observation et du deuxième champ d'observation périphérique ayant le deuxième angle d'observation ;
   ^{∗} le réglage par translation relative selon l'axe central théorique d'une position relative du système optique par rapport à la surface de bague du récipient, de manière à permettre la formation d'une image bidimensionnelle de la surface de bague du récipient et de son bord interne soit dans la première zone d'image correspondant à l'observation selon le premier champ d'observation périphérique soit dans la deuxième zone d'image correspondant à l'observation selon le deuxième champ d'observation périphérique,
   ^{∗} et la recherche d'un cercle principal puis au moins un arc de cercle secondaire, soit dans la première zone d'image soit dans la deuxième zone d'image.
- Le procédé peut comporter :
   ^{∗} l'observation simultanée de la surface de bague, y compris le bord interne de la surface de bague, par le système optique, selon le premier champ d'observation périphérique et selon le deuxième champ d'observation périphérique ;
   ^{∗} la formation simultanée, à partir des rayons réfléchis recueillis selon les premier et deuxième champs d'observation périphériques, par l'intermédiaire du système optique, d'une image bidimensionnelle de la surface de bague du récipient et de son bord interne simultanément à la fois dans la première zone d'image correspondant à l'observation selon l'angle d'observation et dans la deuxième zone d'image correspondant à l'observation selon l'angle d'observation, sur le même capteur bidimensionnel, la première zone d'image et la deuxième zone d'image étant disjointes.
- Le procédé peut comporter :
   ^{∗} la sélection, pour au moins une série de récipients de même type, d'une zone d'image préférentielle parmi la première et la deuxième zone d'image ;
   ^{∗} la recherche, pour ladite série de récipients, dans la zone d'image préférentielle, du cercle principal continu et de l'arc de cercle secondaire correspondants.
- Le procédé peut comporter la recherche, pour au moins un récipient, dans la première zone d'image, d'un premier cercle principal continu et d'un premier arc de cercle secondaire correspondants à ce dit récipient, et, dans la deuxième zone d'image, d'un deuxième cercle principal continu et d'un deuxième arc de cercle secondaire correspondants à ce dit récipient.
- Le procédé peut comporter la recherche, pour chaque récipient d'au moins une série de récipients de même type, dans la première zone d'image, d'un premier cercle principal continu et d'un premier arc de cercle secondaire correspondants à un dit récipient, et, dans la deuxième zone d'image, d'un deuxième cercle principal continu et d'un deuxième arc de cercle secondaire correspondants à ce dit récipient.
- Le système optique peut comporter une première surface primaire de réflexion, la première surface primaire de réflexion étant une surface de révolution axée sur l'axe central théorique et agencée pour réfléchir directement ou indirectement des rayons lumineux, provenant de la surface de bague selon le premier champ d'observation périphérique, en direction du capteur.
- Le système optique peut comporter une deuxième surface primaire de réflexion, la deuxième surface primaire de réflexion étant une surface de révolution axée sur l'axe central théorique et agencée pour réfléchir directement ou indirectement des rayons lumineux, provenant de la surface de bague selon le deuxième champ d'observation périphérique, en direction du capteur.
- La formation de la zone d'image bidimensionnelle peut inclure la formation optique d'une image bidimensionnelle complète et continue à 360° autour de l'axe central théorique de la surface de bague sur le même capteur.
- Le procédé peut comprendre la détermination de la présence d'une bavure lorsqu'une distance radiale d'écartement, entre un arc de cercle secondaire et le cercle principal le plus proche, excède, pour au moins un rayon, une valeur de seuil.
- Le procédé peut comprendre :
   ^{∗} la détermination d'une distance radiale d'écartement entre un arc de cercle secondaire et le cercle principal le plus proche ; et
   ^{∗} la détermination de la présence d'une bavure lorsque ladite distance radiale d'écartement excède, pour au moins un rayon, une valeur de seuil.
- Le procédé peut comprendre :
   ^{∗} la recherche dans la première zone d'image, d'un premier cercle principal et d'un premier arc de cercle secondaire et la détermination d'une distance radiale d'écartement entre les deux ;
   ^{∗} la recherche, dans la deuxième zone d'image, d'un deuxième cercle principal et d'un deuxième arc de cercle secondaire, et la détermination d'une distance radiale d'écartement entre les deux ;
   ^{∗} la mise en correspondance du premier et du deuxième arc de cercle secondaire trouvés respectivement dans la première et la deuxième zone d'image comme étant les deux images selon le premier et deuxième champ d'observation périphérique d'une même bavure ;
   ^{∗} la détermination par combinaison des distances radiales d'écartement mesurées pour lesdits premier et deuxième arcs de cercle secondaires dans les deux zones d'image afin de déterminer une valeur dépendante d'une hauteur relative de la bavure par rapport à la surface de bague ;
   ^{∗} la détermination de la présence d'une bavure lorsque la valeur excède pour au moins une portion d'arc une valeur de seuil.

L'invention propose, comme défini dans la revendication 13, un dispositif d'inspection de la présence d'une bavure de verre à l'endroit d'un bord interne d'une surface de bague d'un récipient, la surface de bague ayant comme géométrie théorique une surface de révolution autour d'un axe central théorique, du type dans lequel le dispositif présente une zone d'installation d'une surface de bague d'un récipient à inspecter, cette zone d'installation ayant un axe d'installation, du type comprenant :
^{∗} un système d'éclairage agencé au-dessus de la zone d'installation et apte à fournir un faisceau lumineux incident comprenant des rayons radiaux contenus dans au moins un plan radial contenant l'axe d'installation, lesdits rayons radiaux incidents s'écartant de l'axe d'installation au niveau de leur incidence sur la surface de bague,
^{∗} un capteur d'image relié à une unité d'analyse d'images ;
^{∗} un système optique agencé au-dessus de la zone d'installation, interposé entre la zone d'installation et le capteur, et apte à former sur le capteur une image de la surface de bague à inspecter placée dans la zone d'installation.

Un tel dispositif peut être caractérisé en ce que :
^{∗} le capteur est un capteur bidimensionnel d'image ;
^{∗} le faisceau lumineux incident est un faisceau comprenant des rayons lumineux incidents radiaux contenus dans des plans radiaux contenant l'axe d'installation et répartis à 360° autour de l'axe d'installation ;
^{∗} le système optique comporte au moins une première surface primaire de réflexion dans un champ de vision amont du capteur, la première surface primaire de réflexion étant une surface de révolution axée sur l'axe d'installation, tournée vers l'axe d'installation, et agencée pour réfléchir, directement ou indirectement, en direction du capteur des rayons lumineux provenant de la zone d'installation selon des plans radiaux contenant l'axe d'installation et selon un premier champ d'observation périphérique ayant un premier angle d'élévation d'observation par rapport à un plan perpendiculaire à l'axe central d'installation.

Par ailleurs, le dispositif comporte au moins une deuxième surface primaire de réflexion dans le champ de vision amont du capteur, la deuxième surface primaire de réflexion étant une surface de révolution axée sur l'axe d'installation, tournée vers l'axe d'installation et agencée pour réfléchir directement ou indirectement en direction du capteur des rayons lumineux, provenant de la zone d'installation selon des plans radiaux contenant l'axe d'installation et selon un deuxième champ d'observation périphérique ayant un deuxième angle d'élévation d'observation par rapport à un plan perpendiculaire à l'axe central d'installation, ledit deuxième angle d'observation étant différent du premier angle d'élévation d'observation, la première surface primaire et la deuxième surface primaire de réflexion étant toutes deux dans des portions disjointes du champ de vision amont du capteur.

De plus, la première surface primaire de réflexion et la deuxième surface de réflexion déterminent pour le capteur respectivement une première portion de champ de vision aval et une deuxième portion de champ de vision aval qui se recoupent dans la zone d'inspection.

Selon d'autre caractéristiques, optionnelles, de l'invention, prises seules ou en combinaison :
- La première surface primaire de réflexion et la deuxième surface primaire de réflexion sont tronconiques d'angles au sommet différents.
- La première surface primaire de réflexion et la deuxième surface primaire de réflexion sont superposées et présentent une arête circulaire commune correspondant à une arête inférieure de la surface supérieure et à une arête supérieure de la surface inférieure.
- La première surface primaire de réflexion et la deuxième surface primaire de réflexion sont décalées axialement l'une par rapport à l'autre.
- La première surface primaire de réflexion et la deuxième surface primaire de réflexion sont décalées axialement en étant séparées axialement d'un écart axial non nul entre un bord inférieur de la surface supérieure et un bord supérieur de la surface inférieure.
- La première surface primaire de réflexion et la deuxième surface primaire de réflexion peuvent être positionnées pour que :
   ^{∗} considérant un point de la surface de bague ;
   ^{∗} considérant un premier chemin optique suivi, entre le point considéré et le capteur par un rayon incident réfléchi en ce point considéré de la surface de bague selon le premier angle d'élévation d'observation puis réfléchi en direction du capteur sur la première surface primaire de réflexion ; et
   ^{∗} considérant un deuxième chemin optique suivi, entre le point considéré et le capteur par un deuxième rayon incident réfléchi en ce point considéré de la surface de bague selon le deuxième angle d'élévation d'observation et réfléchi en direction du capteur sur la deuxième surface primaire de réflexion ;
      la différence de longueur entre le premier chemin optique et le second chemin optique est inférieure à la valeur de profondeur de champ de l'image formée lorsque le système optique est mis au point sur la surface de bague.
- La première surface primaire de réflexion et la deuxième surface primaire de réflexion peuvent être, selon un plan de coupe radial contenant l'axe central d'installation, tangentes à un ellipsoïde dont un foyer est au centre de la pupille d'entrée d'un système objectif d'une caméra comprenant le capteur d'image et dont le deuxième foyer est agencé sur l'axe central d'installation, au niveau de la bague du récipient à inspecter.
- La surface primaire de réflexion est évasée selon la direction de l'axe d'installation et présente un grand diamètre et un petit diamètre tous les deux supérieurs au diamètre maximal de la surface de bague à inspecter.
- La surface primaire de réflexion peut être une surface tronconique, tournée vers l'axe d'installation.
- La surface primaire de réflexion peut réfléchir indirectement des rayons lumineux en direction du capteur, et le dispositif peut alors comporter, entre la surface primaire de réflexion et le capteur, au moins une surface de réflexion de renvoi.
- La surface de réflexion de renvoi peut comporter une surface de révolution orientée à l'opposé de l'axe d'installation de manière à renvoyer les rayons en direction du capteur.
- Entre le capteur et la surface primaire de réflexion, le système optique peut être télécentrique.
- Le faisceau périphérique incident, peut comprendre, dans un même plan radial, des rayons radiaux non parallèles.
- Le système d'éclairage peut comporter une source lumineuse centrale au moins en partie contenue dans une enveloppe cylindrique de révolution ayant pour axe l'axe d'installation et pour diamètre le diamètre du bord interne de la surface de bague à inspecter.
- Le dispositif peut comporter une source lumineuse annulaire de révolution, axée sur l'axe d'installation, qui génère des rayons lumineux incidents radiaux qui impactent la surface de bague après avoir intersecté l'axe d'installation entre la source et la surface de bague.
- Le dispositif peut comprendre un support supportant le capteur, le système objectif, une surface de réflexion primaire, une source de lumière et éventuellement une surface de réflexion de renvoi.

L'invention concerne aussi, comme défini dans la revendication 18, une ligne d'inspection de récipients présentant une surface de bague, du type dans laquelle des récipients sont déplacés sur une ligne de convoyage par un convoyeur qui transporte les récipients selon une direction de déplacement horizontale perpendiculaire à un axe central théorique des récipients 14 qui présentent ainsi leur surface de bague dans un plan horizontal tourné vers le haut, caractérisée en ce que l'installation comporte un dispositif ayant au moins une des caractéristiques ci-dessus, qui est agencé sur l'installation avec son axe d'installation en position verticale, de telle sorte que le champ d'observation et le faisceau lumineux incident sont orientés vers le bas, vers la zone d'installation qui se situe entre le dispositif et un organe de transport du convoyeur.

Dans une telle ligne d'inspection le convoyeur peut amener les récipients de manière à ce que leur axe central théorique coïncide avec l'axe d'installation, et, au moment de cette coïncidence, une image peut être acquise grâce au dispositif, sans contact du dispositif avec le récipient.

Diverses autres caractéristiques ressortent de la description faite ci-dessous en référence aux dessins annexés qui montrent, à titre d'exemples non limitatifs, des formes de réalisation de l'objet de l'invention.
Les **Figures 1A, 1B** et **1C** illustrent en section par un plan radial, uniquement la partie supérieure du col d'un récipient qui présente une bague. Seule une moitié de la section est illustrée.
La **Figure 2** est une vue schématique en coupe axiale d'un dispositif d'inspection conforme aux enseignements de l'invention, illustrant le trajet optique de deux rayons d'observation entre le récipient et une caméra d'observation.
La **Figure 3** est une vue schématique en coupe axiale d'un dispositif d'inspection conforme aux enseignements de l'invention, illustrant différentes portions du champ de vision du capteur au travers d'un exemple de réalisation d'un système. La **Figure 4** est une vue agrandie d'une partie de la **Fig. 3****.**
La **Figure 5** est une vue schématique en coupe axiale d'un dispositif d'inspection conforme aux enseignements de l'invention, illustrant différentes portions du champ de vision du capteur au travers d'un autre exemple de réalisation d'un système. Les **Figures 6 et 7** sont des vues agrandies d'une partie de la **Fig. 5**, illustrant deux positions relatives d'un récipient à inspecter par rapport au dispositif d'inspection, pour obtenir deux angles d'élévation d'observation différents.
La **Figure 8** est une vue illustrant une image susceptible d'être formée par le capteur du dispositif de la **Fig. 3** en présence d'un récipient à inspecter dans la zone d'installation.
La **Figure 9** illustre une variante de réalisation de la source lumineuse susceptible d'être utilisée avec les différents modes de réalisation évoqués.
La **Figure 10** illustre une ligne d'inspection de récipients mettant en œuvre un dispositif et/ou un procédé selon l'invention.

L'inspection de la surface de bague selon le procédé de l'invention va donc pour l'essentiel consister à visualiser, et pourra éventuellement au moins pour certaines variantes, permettre de quantifier, un écart de position, selon la direction de l'axe central théorique **A1** et selon la direction radiale par rapport à cet axe **A1,** entre un cercle principal représentatif de la surface de bague et un arc de cercle secondaire représentatif d'une ligne sommitale d'un défaut éventuel qui serait présent à l'endroit du bord interne de la surface de bague.

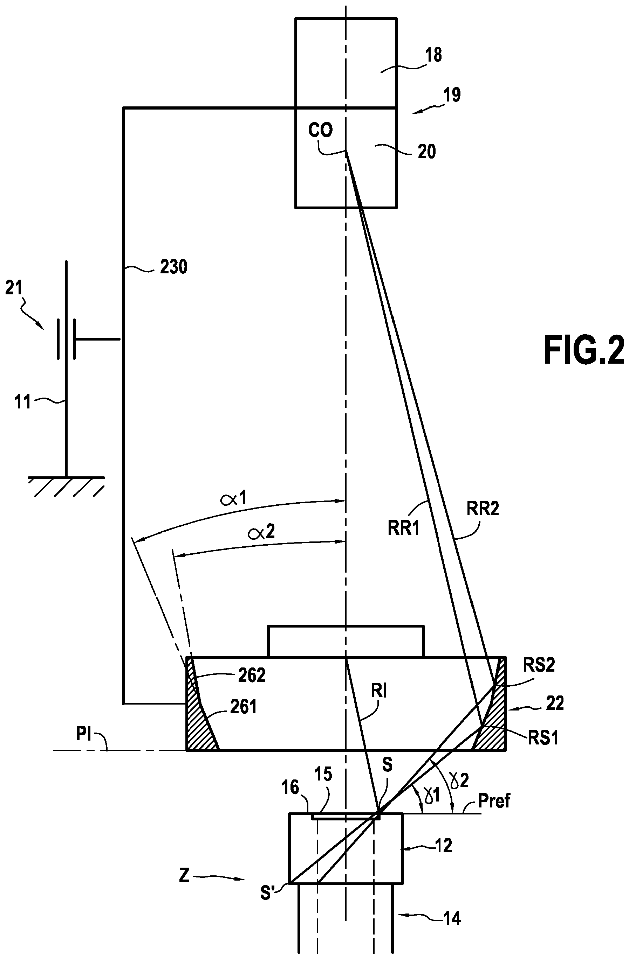

Pour qu'un récipient **14** soit inspecté correctement, il conviendra de veiller à ce que le récipient soit présenté de manière adéquate devant un dispositif d'inspection **10,** dont plusieurs variantes de réalisation sont illustrées sur les **Figs. 2** à **10****.**

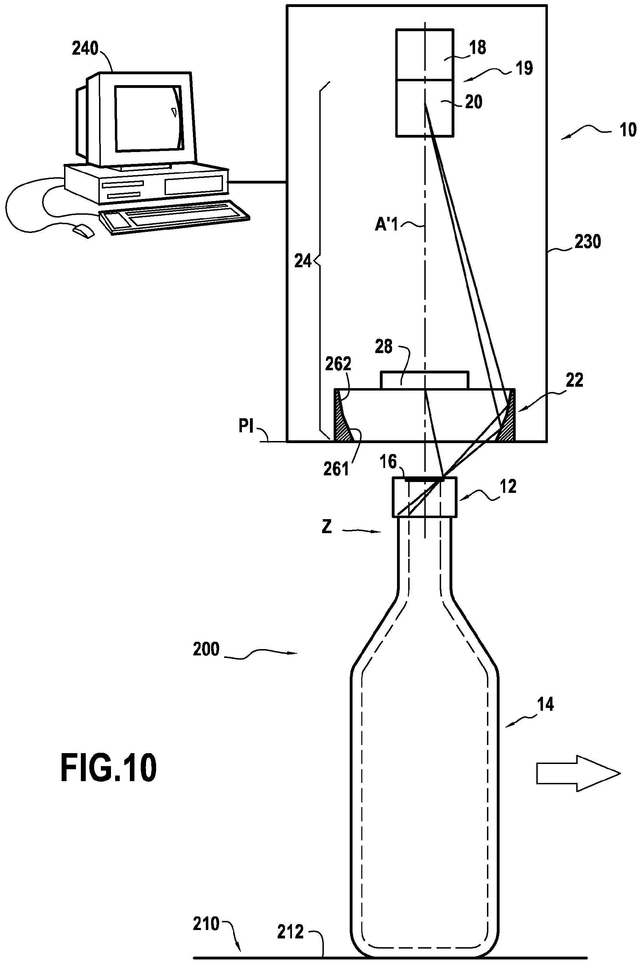

Pour cela, comme on peut le voir par exemple sur les **Figs. 2** et **10****,** un dispositif **10** selon l'invention détermine une zone d'installation **Z** dans laquelle le récipient devra être installé. Cette zone d'installation peut être définie par un axe d'installation **A'1** et un plan d'installation **PI** défini comme étant un plan perpendiculaire à l'axe d'installation **A'1** situé au niveau du point le plus bas du dispositif. Ainsi, pour être inspecté correctement, un récipient devra être présenté de telle sorte que son axe central théorique **A1** corresponde au mieux à l'axe d'installation **A'1,** et que sa bague soit présentée avec son extrémité supérieure ouverte tournée en direction du dispositif **10,** mais en dessous du plan d'installation. Dans un cas idéal, les deux axes **A1** et **A'1** sont confondus. On comprend que l'intégralité du dispositif d'inspection **10** selon l'invention peut être positionnée au-dessus du plan d'installation tandis que le récipient sera amené en dessous du plan d'installation, sans risque de contact avec le dispositif. Le récipient **14** pourra donc être amené par n'importe quel mouvement de translation selon une direction perpendiculaire à l'axe d'installation **A'1,** sans risquer d'interférer avec le dispositif **10.**

Le dispositif et le procédé selon l'invention font appel à un capteur bidimensionnel **18** destiné à acquérir une image bidimensionnelle de la surface de bague **16** du récipient. Ce capteur, aussi qualifié de matriciel, peut être incorporé dans une caméra **19** et il peut être photoélectrique, par exemple du type CCD ou CMOS. Le capteur **18** est par exemple constitué d'une matrice bidimensionnelle d'éléments photoélectriques. Le capteur est généralement associé à un circuit électronique de traitement des signaux fournis par les éléments photoélectriques pour délivrer un signal analogique ou numérique représentatif de l'image reçue par le capteur. Ce signal représentatif de l'image optique reçue par le capteur constitue de préférence une image électronique bidimensionnelle qui peut ensuite être délivrée à une unité d'analyse d'images comprenant un dispositif de numérisation d'images. Avec l'essor des caméras numériques intégrant la fonction de numérisation des images, de préférence ce signal représentatif de l'image optique reçue par le capteur constitue une image numérique bidimensionnelle qui peut ensuite être délivrée à un dispositif de traitement d'images et/ou à un dispositif d'inspection et/ou à un dispositif de stockage d'images (non représentés) formant une unité d'analyse d'images.

Le capteur **18** est généralement associé à un système objectif optique **20,** qui peut comporter un ou plusieurs éléments optiques associés, notamment une ou plusieurs lentilles, et éventuellement un diaphragme, pour permettre la formation d'une image optique sur le capteur. Le système objectif optique **20** et le capteur **18** font généralement partie de la caméra **19.**

Dans certains modes de réalisation de l'invention, le système objectif optique **20** associé au capteur **18** peut être un système objectif télécentrique. Un système objectif télécentrique est bien connu de l'homme du métier des dispositifs de vision industrielle car il est utilisé pour former sur le capteur une image qui ne comporte pas ou quasiment pas d'effet de parallaxe. En théorie optique, un système objectif télécentrique est un système objectif dont la pupille d'entrée est positionnée à l'infini. Il s'ensuit qu'un tel objectif observe dans son champ de vision selon des rayons principaux d'observation parallèles ou quasi-parallèles, d'où l'absence d'effet de parallaxe. Les rayons principaux d'observation sont ceux qui passent par le centre de la pupille d'entrée du système d'objectif **20.** Cependant, le système objectif n'est pas nécessairement télécentrique, comme cela est illustré sur les figures.

Le capteur **18** présente généralement une forme rectangulaire ou carrée, donc bidimensionnelle, de sorte qu'il délivre une image numérique bidimensionnelle représentative de l'image optique bidimensionnelle formée sur le capteur par le système optique **20.** On appellera image globale **IG** l'intégralité de l'image numérique délivrée par le capteur **18.** Il sera vu plus loin que, dans cette image numérique globale, seulement une ou plusieurs zones d'images seront utiles. De préférence, l'image globale **IG** est acquise lors d'un unique temps d'acquisition du capteur.

L'axe optique du système objectif **20** est de préférence confondu avec l'axe d'installation **A'1.** On pourrait toutefois imaginer que cet axe optique ne soit pas rectiligne, mais segmenté, par exemple par intégration d'un miroir de renvoi dans le système objectif. On pourrait ainsi prévoir un miroir de renvoi à 45° par rapport à l'axe d'installation, avec ainsi un premier segment de l'axe optique, côté capteur, qui serait agencé à 90° par rapport à l'axe d'installation, et un second segment, de l'autre côté du miroir de renvoi, qui serait agencé en concordance avec l'axe d'installation **A'1.**

Dans les illustrations des **Figs 2** à **10****,** le système optique est agencé verticalement selon l'axe **A'1,** et il est tourné vers le bas pour observer la zone d'installation en dessous du dispositif, et pour ainsi observer un éventuel récipient **14** agencé dans la zone d'installation. Le capteur photoélectrique **18** est donc au sommet du dispositif d'inspection et il est tourné vers le bas en direction de la zone installation. Avec cette disposition, on comprend que la surface de bague **16** d'un récipient **14** placé dans la zone installation est donc contenue dans un plan parallèle au plan du capteur.

Aussi, selon l'invention, un système optique **24** est interposé entre la zone d'installation **Z** du récipient et le capteur **18** pour former sur le capteur une image de la surface de bague d'un tel récipient placé dans la zone d'installation. Ce système optique **24** comprend, en plus du système objectif optique **20,** au moins un élément optique de vision périphérique **22** qui est ici agencé entre le système objectif **20** et la zone d'installation. L'ensemble du système optique **24** entre le capteur **18** et la zone d'installation **Z** comprend ainsi le système objectif **20** et l'élément optique de vision périphérique **22.**

De manière pratique, on définira l'axe d'installation **A'1** comme étant la prolongation dans la zone d'installation de l'axe optique du système optique **24.**

Dans l'exemple illustré, le capteur **18,** son système objectif **20,** l'élément optique de vision périphérique **22** et la zone d'installation sont alignés dans cet ordre selon le même axe d'installation **A'1.**

Au travers du système optique **24,** on forme au moins une image plane de la surface de bague sur le capteur par le biais d'une transformation géométrique optique qui convertit la surface de bague en une image de surface de bague. De préférence, la transformation géométrique optique n'affecte pas le positionnement angulaire relatif de deux points de la surface de bague autour de l'axe, en ce sens que deux points de la surface de bague réelle, séparés par un écart angulaire autour de l'axe central théorique, voient, dans l'image obtenue par la transformation géométrique optique, leurs images respectives séparées du même écart angulaire autour de l'image de l'axe central théorique.

Avantageusement, le système optique **24** permet la formation optique d'une image bidimensionnelle complète et continue à 360° autour de l'axe central théorique **A1** de la surface de bague **16** sur le même capteur **18.**

Dans les exemples illustrés, l'élément optique de vision périphérique **22** qui assure l'essentiel de cette transformation optique comporte au moins une première surface primaire de réflexion **261** et, éventuellement, comme dans les exemples particuliers de réalisation qui seront décrits ci-après, une deuxième surface primaire de réflexion **262**. La première surface primaire de réflexion **261** et, éventuellement, la deuxième surface primaire de réflexion **262**, sont agencées dans un champ de vision amont du capteur **18**, c'est-à-dire dans le champ de vision du capteur qui est compris entre d'une part le capteur **18** et d'autre part la première surface primaire de réflexion **261** et la deuxième surface primaire de réflexion **262**. Dans l'exemple illustré, le champ de vision amont du capteur **18** est défini par le système objectif **20**.

La première surface primaire de réflexion **261** est une surface de révolution axée sur l'axe d'installation **A'1** et agencée pour réfléchir des rayons lumineux, provenant de la surface de bague, en direction du capteur. La surface primaire de réflexion **261** possède donc des propriétés spéculaires. Elle peut être avantageusement formée par un miroir, mais elle peut être aussi réalisée sous la forme d'un prisme, i.e. un dioptre optique. La deuxième surface primaire de réflexion **262** présente avantageusement les mêmes caractéristiques. La première surface primaire de réflexion et la deuxième surface primaire de réflexion sont avantageusement décalées axialement selon la direction de l'axe d'installation **A'1** l'une par rapport à l'autre, c'est-à-dire qu'elles ne sont pas agencées axialement au même niveau.

L'axe de symétrie de révolution de la surface primaire de réflexion **261** peut être dans ce cas considéré comme superposé à l'axe d'installation **A'1**.

Dans les exemples de réalisation illustrés, la réflexion des rayons lumineux provenant de la surface de bague vers le capteur est une réflexion directe, sans autre surface de réflexion.

Dans les exemples illustrés, la première surface primaire de réflexion **261** est une surface de révolution qui est tournée vers l'axe d'installation **A'1**. Dans l'exemple illustré, elle s'évase en direction du capteur. Plus précisément, la première surface primaire de réflexion **261** comporte une surface tronconique concave présentant un petit diamètre et un grand diamètre tous les deux supérieurs au diamètre de la surface de bague du récipient à inspecter. Son grand diamètre est agencé du côté du capteur selon l'axe d'installation tandis que son petit diamètre est agencé du côté de la zone d'installation. La deuxième surface primaire de réflexion **262** présente avantageusement les mêmes caractéristiques. Dans ce cas, la première surface primaire de réflexion **261** et la deuxième surface primaire de réflexion **262** sont tronconiques d'angles au sommet différents.

Dans les exemples comportant deux surfaces primaires de réflexion, la première surface primaire de réflexion **261** et la deuxième surface primaire de réflexion **262** sont avantageusement décalées axialement en étant superposées axialement, c'est-à-dire directement accolées l'une à l'autre selon la direction de l'axe d'installation. Arbitrairement, on considère que la surface primaire de réflexion qui se trouve en-dessous de l'autre selon la direction de l'axe d'installation **A'1** est la première surface primaire de réflexion **261**, la deuxième surface primaire de réflexion **262** étant alors agencée au-dessus de la première. Comme dans les exemples illustrés comportant deux surfaces primaires de réflexion, les deux surfaces primaires de réflexion peuvent alors présenter une arête circulaire commune correspondant au bord inférieur de la surface supérieure, ici la deuxième surface primaire de réflexion **262**, et au bord supérieur de la surface inférieure, ici la première surface primaire de réflexion **261**. Cependant la première surface primaire de réflexion **261** et la deuxième surface primaire de réflexion **262** pourraient être décalées axialement en étant séparées axialement d'un écart axial non nul entre le bord inférieur de la surface supérieure et le bord supérieur de la surface inférieure.

Dans un dispositif de l'invention, le système optique **24** définit au moins un premier champ d'observation périphérique qui observe la surface de bague par au-dessus, selon des rayons d'observation radiaux contenus dans un plan radial contenant l'axe d'installation. Par rapport à l'axe **A1** de la surface de bague, cette observation se fait radialement depuis l'extérieur par rapport à la surface de bague. Les rayons d'observation radiaux sont répartis à 360° autour de l'axe d'installation **A'1**. Le premier champ d'observation périphérique a, par rapport à un plan **PRef** perpendiculaire à l'axe d'installation **A'1,** un premier angle d'élévation d'observation **γ1,** qui est par exemple compris entre 20° et 70°. Dans l'exemple illustré, le premier champ d'observation périphérique comprend les rayons d'observation qui sont réfléchis par la première surface primaire de réflexion **261** vers le capteur **18.** En d'autres termes ce premier champ d'observation périphérique constitue une première portion aval **CAV1** du champ de vision du capteur **18** au travers du système optique **24**, tel que déterminée par la première surface primaire de réflexion **261**, entre cette première surface **261** et la zone d'installation **Z**. Dans la portion des rayons d'observation qui est entre cette première surface primaire de réflexion **261** et la zone d'installation **Z**, les rayons d'observation sont centripètes vers l'axe **A1** lorsqu'on les parcours depuis la première surface **261** vers la zone d'installation **Z.**

Dans les modes de réalisation comprenant la deuxième surface primaire de réflexion **262,** le système optique **24** définit, par l'intermédiaire de cette deuxième surface primaire de réflexion, un deuxième champ d'observation périphérique qui observe la surface de bague par au-dessus, selon des rayons d'observation radiaux contenus dans un plan radial contenant l'axe d'installation. Par rapport à l'axe **A1** de la surface de bague, cette observation se fait radialement depuis l'extérieur de à la surface de bague. Les rayons d'observation radiaux sont répartis à 360° autour de l'axe d'installation **A'1.** Le deuxième champ d'observation périphérique a, par rapport à un plan **PRef** perpendiculaire à l'axe d'installation **A'1,** un deuxième angle d'élévation d'observation **γ2**, qui est par exemple compris entre 20° et 70°, ce deuxième angle étant différent du premier angle d'élévation d'observation **γ1**. De préférence, le premier et le deuxième angle d'élévation d'observation différent par au moins 5 degrés d'angle. Dans l'exemple illustré le premier champ d'observation périphérique comprend les rayons d'observation qui sont réfléchis sur la deuxième surface primaire de réflexion **262.** Ce deuxième champ d'observation périphérique constitue une deuxième portion aval **CAV2** du champ de vision du capteur **18** au travers du système optique, tel que déterminée par la deuxième surface primaire de réflexion **262**, entre cette deuxième surface **262** et la zone d'installation **Z**. Dans la portion des rayons d'observation qui est entre cette deuxième surface primaire de réflexion **262** et la zone d'installation **Z**, les rayons d'observation sont centripètes vers l'axe **A1** lorsqu'on les parcours depuis la première surface **261** vers la zone d'installation **Z**. On note que la première surface primaire **261** et la deuxième surface primaire de réflexion **262** sont chacune dans des portions disjointes du champ de vision amont du capteur, au sens qu'elles peuvent être vues simultanément par le capteur au travers du système objectif **20**, sans se masquer l'une l'autre. Dans la mesure où l'une masquerait l'autre partiellement, on ne considérera, pour celle qui est partiellement masquée, que la partie non masquée utile.

De préférence, le premier et/ou le second champ d'observation périphérique est sans rupture azimutale autour de l'axe d'installation **A'1**. Notamment, il n'y a pas de discontinuité angulaire azimutale entre deux rayons radiaux d'observation infiniment proches angulairement autour de l'axe d'installation. De la sorte, il n'y a pas de rupture de point vue dans l'image générée par le champ considéré, qui pourrait rendre l'image plus difficile à interpréter. Pour cela la première et/ou la deuxième surface de réflexion **261, 262** est de préférence sans discontinuité de courbure autour de l'axe d'installation **A'1,** la courbure étant analysée dans un plan perpendiculaire à l'axe d'installation **A'1,** pour assurer un champ d'observation sans rupture azimutale.

Le premier et/ou le second champ d'observation périphérique est aussi de préférence continu en azimut au sens où aucun angle azimutal d'observation autour de l'axe d'installation n'est masqué. Toutefois, dans certains cas, notamment du fait de contraintes d'installation matérielle, par la présence d'un câble d'alimentation, il se peut qu'un ou plusieurs secteurs angulaires, autour de l'axe d'installation, soient masqués. De préférence, un tel secteur angulaire azimutal masqué sera d'étendue faible voire très faible, de préférence inférieure à 5 degrés autour de l'axe d'installation. Pour cela, la première et/ou deuxième surface de réflexion **26** est aussi de préférence continue en azimut au sens qu'elle est continuellement réfléchissante autour de l'axe d'installation **A'1,** sans secteur angulaire masqué, pour assurer la continuité azimutale du champ d'observation.

Le premier et/ou le second champ d'observation périphérique s'étend à 360° autour de l'axe d'installation **A'1.** Le premier et/ou le second champ d'observation périphérique observe « par au-dessus » au sens que la surface de bague est observée depuis au-dessus d'un plan **Pref** perpendiculaire à l'axe central théorique **A1** de la surface de bague, et contenant au moins un point de la surface de bague, par exemple le point **Sref** le plus haut selon la direction de l'axe central théorique **A1.** Pour un champ d'observation périphérique donné, les rayons d'observation sont les rayons issus de la zone d'installation et susceptibles d'être reçus, après réflexion sur la surface primaire de réflexion **261, 262** correspondante, par le capteur au travers du système optique **24**. Parmi ces rayons, les rayons principaux d'observation sont ceux qui, après réflexion sur la surface primaire de réflexion **261, 262** correspondante, passent par le centre de la pupille d'entrée **CO** du système objectif **20.** L'angle d'élévation d'observation d'un rayon principal d'observation correspond à l'angle par rapport à un plan perpendiculaire à l'axe d'installation **A'1,** d'un rayon principal d'observation dans la zone d'installation où il est susceptible d'impacter la surface de bague d'un récipient à inspecter.

Dans le cadre d'un dispositif pourvu d'un système optique télécentrique, les rayons principaux d'observation reçus par le capteur entrent tous dans le système objectif de manière parallèle. Si de plus, comme dans les systèmes illustrés, la surface primaire de réflexion **261, 262** est une surface tronconique générée par une droite, l'angle d'élévation d'observation **γ1, γ2** du champ d'observation périphérique correspondant est alors un angle unique pour tout rayon principal d'observation appartenant à ce champ d'observation périphérique donné, et il peut être directement déduit de l'inclinaison de la surface primaire de réflexion correspondante **261, 262** par rapport à l'axe d'installation **A'1.**

Cependant, dans le cas d'un dispositif n'ayant pas un système objectif télécentrique, ou dans le cas où l'élément optique **22** ne serait pas strictement un cône généré par une droite, les rayons d'observation reçus par le capteur, y compris les rayons principaux, peuvent avoir des angles d'élévation d'observation différents les uns par rapport aux autres au sein d'un champ d'observation périphérique déterminé par une surface de réflexion primaire donnée. Dans ce cas, on peut prendre comme convention, comme illustré à la **Fig. 2**, que l'angle d'élévation d'observation d'un champ d'observation périphérique est l'angle, mesuré dans la zone d'installation où il est susceptible d'impacter la surface de bague d'un récipient à inspecter, par rapport à un plan perpendiculaire à l'axe d'installation **A'1,** d'un rayon radial d'observation qui, après réflexion sur la surface primaire de réflexion **261, 262** correspondante, à mi-hauteur de celle-ci, est dirigé au vers le centre de la pupille d'entrée **CO** du système objectif **20.**

La première et/ou la seconde surface primaire de réflexion pourrait être non plus tronconique mais une surface de révolution à double courbure, évasée, générée par la révolution, autour de l'axe d'installation **A'1,** d'un tronçon de courbe non droite, par exemple un tronçon de parabole, d'hyperbole ou d'ellipse. Dans un plan radial, cette surface présentera par exemple un profil concave ou convexe, tout en conservant son profil concave dans un plan perpendiculaire à l'axe d'installation **A'1.** Une telle surface à double courbure peut être utilisée notamment pour rendre le système **24,** dans sa globalité, télécentrique vis-à-vis du capteur, si le système objectif **20** en soi ne l'est pas, pour que le champ d'observation périphérique déterminé par la surface primaire de réflexion correspondante comporte des rayons principaux d'observation ayant tous le même angle d'élévation d'observation.

Dans un procédé selon l'invention, on forme, ici au travers du système optique **24,** une image bidimensionnelle optique de la surface de bague sur le capteur par le biais d'une transformation géométrique optique qui convertit la surface de bague en une image de surface de bague. La même transformation convertit une bavure en une image optique de la bavure sur le capteur. Ces deux images optiques bidimensionnelles sont converties en image numériques, respectivement de la surface de bague et de la bavure, par l'intermédiaire du capteur, éventuellement avec l'aide en plus d'un circuit électronique de numérisation si celui-ci n'est pas intégré au capteur. Dans le cas où les deux surfaces primaires de réflexion **261, 262** ci-dessus sont présentes, on forme deux images tridimensionnelles optiques de la surface de bague sur le capteur dans deux zones annulaires du capteur et deux images tridimensionnelles optiques de la bavure sur le capteur. Ces images optiques sont converties en deux images numériques de la surface de bague **CP1, CP2** et en deux images numériques de la bavure **CS1, CS2** par l'intermédiaire du capteur. Dans la pratique, on peut confondre l'image optique formée sur le capteur avec l'image numérique délivrée par le capteur, éventuellement avec l'aide en plus d'un circuit électronique de numérisation si celui-ci n'est pas intégré au capteur.

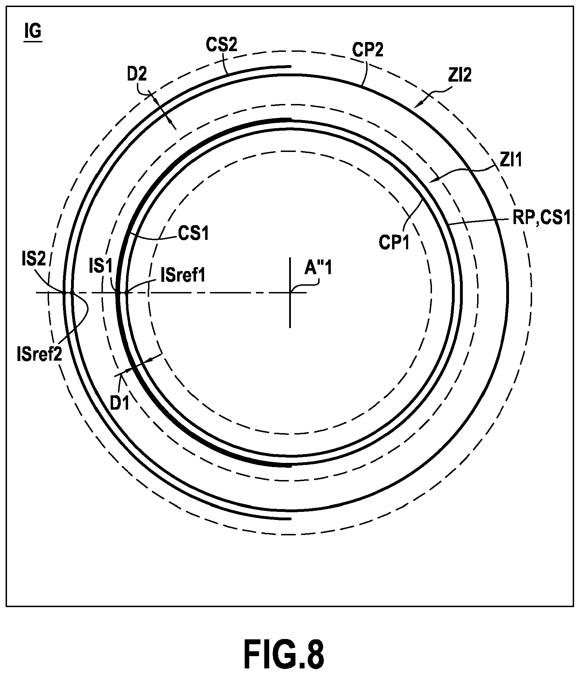

En regardant par exemple la **Fig. 1B****,** on considère un point considéré **Sref** de la surface de bague et le point correspondant **S** de la bavure qui est le point de cette bavure qui aurait la même coordonnée angulaire que le point considéré **Sref** dans un système de coordonnées cylindriques centré sur l'axe central théorique. En regardant, la **Fig. 8****,** on considère que le point image **ISref1** ou **ISref2** de l'image de la surface de bague est l'image du point **Sref** de la surface de bague au travers du système optique (éventuellement les deux images **ISref1** et **ISref2** en cas de présence des deux surfaces primaires de réflexion telles que décrites ci-dessus), du fait de la transformation géométrique optique. Le point image **IS1** ou **IS2** de l'image de la bavure est l'image du point correspondant **S** de la bavure au travers du système optique (éventuellement les deux images **IS1** et **IS2** en cas de présence des deux surfaces primaires de réflexion telles que décrites ci-dessus), du fait de la transformation géométrique optique.

De préférence, la transformation géométrique optique opérée par le système optique, convertit une différence de hauteur réelle **dZ,** selon la direction de l'axe central théorique, entre le point considéré **Sref** de la surface de bague et le point correspondant **S** de la bavure, en un décalage radial image additionnel, sur l'image, du point image **ISref1, Isref2** de l'image de surface de bague du récipient par rapport au point image correspondant **IS1, IS2** de la bavure de surface de bague. Ce décalage radial image additionnel vient s'ajouter à un décalage radial résultant du décalage radial réel entre le point **Sref** et le point correspondant **S.**

La transformation géométrique optique opérée par le système optique génère donc, dans l'image bidimensionnelle recueillie par le capteur, un décalage radial image additionnel résultant d'une différence de hauteur réelle entre un point considéré **Sref** de la surface de bague et un point correspondant **S** de la bavure.

Dans les exemples de réalisation du dispositif selon l'invention illustrés aux **Figs. 2** à **10****,** comportant au moins une surface primaire de réflexion **261, 262** tronconique, concave dans un plan perpendiculaire à l'axe d'installation, le demi-angle au sommet **α1, α2** caractéristique de la surface primaire de réflexion concave **261, 262** détermine un rapport d'influence, sur le décalage radial dans l'image, entre une différence de hauteur et une différence de position radiale entre un point de la surface de bague et un point de la bavure situé dans le même demi-plan radial délimité par l'axe d'installation. Dans un exemple de réalisation, prévu pour des récipients dont la surface de bague présente un diamètre externe inférieur à 30 mm, le demi-angle au sommet **α1** caractéristique de la première surface primaire de réflexion concave **261** vaut **20** degrés d'angle, et crée un premier champ d'observation périphérique ayant un angle d'élévation d'observation **γ1** de 40°, tandis que le demi-angle au sommet **α2** caractéristique de la deuxième surface primaire de réflexion concave **262** vaut 13,15 degrés d'angle, et crée un premier champ d'observation périphérique ayant un angle d'élévation d'observation **γ2** de 52°.

Selon un autre aspect de l'invention, le procédé prévoit que la surface de bague **16** du récipient soit éclairée à l'aide d'un faisceau lumineux incident comprenant des rayons lumineux incidents radiaux contenus dans au moins un plan radial contenant l'axe central théorique **A1** de la bague, lesdits rayons radiaux incidents s'écartant de l'axe central théorique **A1** au niveau de leur incidence sur la surface de bague, et certains des rayons radiaux du faisceau lumineux incident étant réfléchis par réflexion spéculaire sur la surface de bague **16,** sous la forme de rayons réfléchis. Le faisceau lumineux incident comprend des rayons lumineux incidents radiaux contenus dans des plans radiaux répartis à 360° autour de l'axe central théorique **A1.**

La surface de bague est éclairée par en-dessus, au sens que des rayons lumineux incidents arrivent sur la surface de bague **16** en provenance de points situés au-dessus du plan **PRef** perpendiculaire à l'axe central théorique **A1** et contenant un point de la surface de bague, par exemple le point le plus haut selon la direction de l'axe central théorique **A1.**

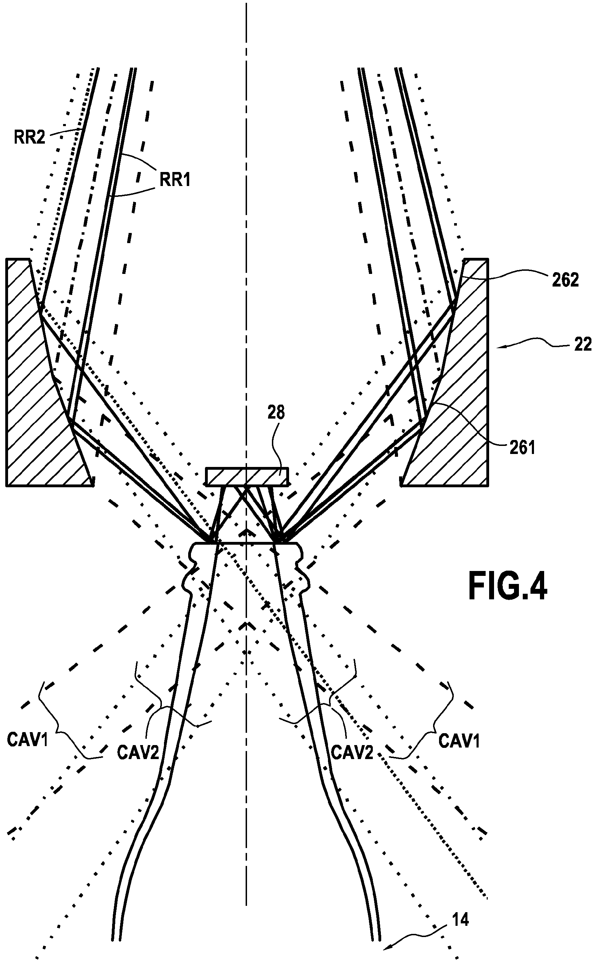

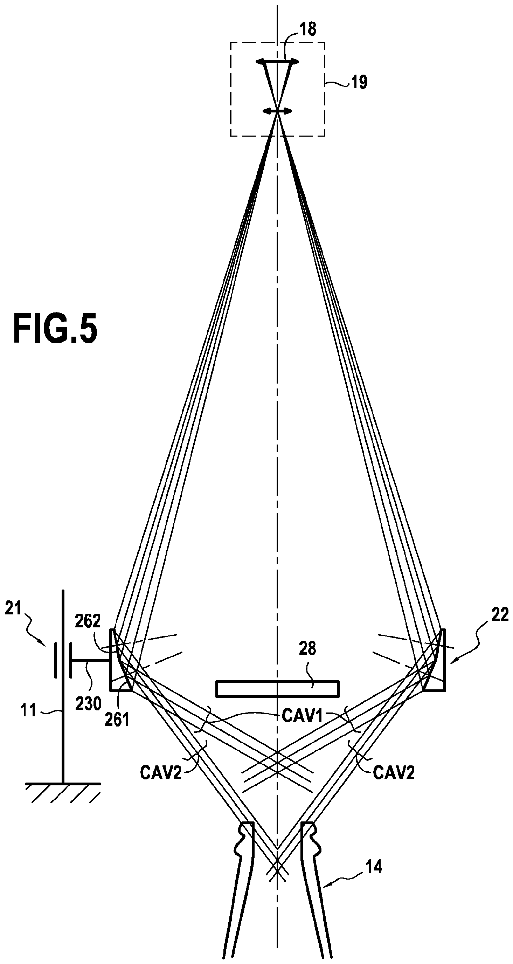

Les rayons radiaux incidents pourraient être des rayons parallèles, mais cela n'est pas obligatoire et, dans le procédé illustré par les **Figs. 4** et **5****,** le faisceau lumineux incident périphérique comprend, dans un demi-plan radial donné, contenant l'axe central théorique **A1** et délimité par l'axe central théorique **A1,**des rayons radiaux non parallèles.

Dans un dispositif selon l'invention, le dispositif comporte ainsi un système d'éclairage apte à fournir un tel faisceau lumineux incident.

De préférence, ce système d'éclairage comprend une source lumineuse **28** axée sur l'axe d'installation **A'1** et agencée au-dessus de la zone d'installation, donc au-dessus de la surface de bague.

Dans un premier mode de réalisation, illustré sur les **Figs. 4** et **5** notamment, le système d'éclairage comporte une source lumineuse **28** centrale au moins en partie contenue dans une enveloppe cylindrique de révolution ayant pour axe l'axe d'installation **A'1** et pour diamètre le diamètre du bord interne **15** de la surface de bague à inspecter. Une telle source lumineuse peut être une source ponctuelle, centrée sur l'axe d'installation, ou au contraire, comme illustré sur les **Figs. 4** et **5** notamment, une source couvrant une certaine étendue radialement par rapport à l'axe d'installation. Dans certains modes de réalisation, la source lumineuse **28** couvre une étendue de diamètre inférieur ou égal au diamètre de la bague du récipient. La source lumineuse **28** peut être une source diffuse, diffusant des rayons incidents dans de multiples directions. Par exemple, la source lumineuse **28** peut comporter un diffuseur qui, par exemple, couvre une surface dont le diamètre peut être inférieur ou égal au diamètre de la bague du récipient. Si elle est munie d'un diffuseur, en chaque point du diffuseur, la source lumineuse **28** diffuse des rayons incidents dans de multiples directions. De préférence, l'étendue radiale de la source lumineuse **28** centrale et l'orientation des rayons incidents qu'elle émet sont choisis pour que les rayons incidents ne puissent pas impacter directement une surface cylindrique externe de la bague **12,** située en-dessous du bord externe **17,** ni des filets portés par une telle surface cylindrique externe de la bague **12.**

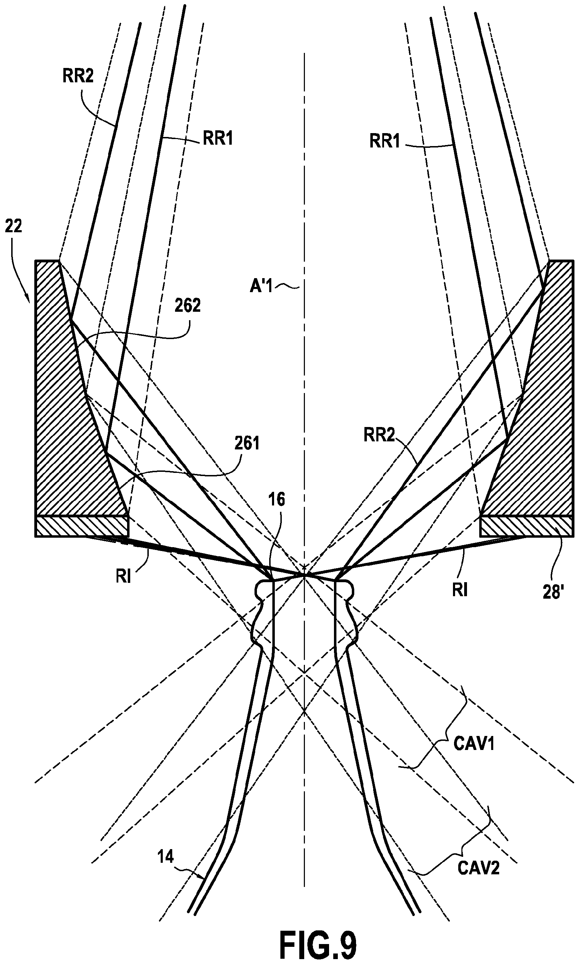

En variante, comme illustré sur la **Fig. 9****,** le dispositif pourrait comporter une source lumineuse **28'** annulaire de révolution, axée sur l'axe d'installation **A'1**, qui génère des rayons lumineux incidents radiaux qui impactent la zone d'installation après avoir intersecté l'axe d'installation **A'1**. Dans ce cas, la source lumineuse annulaire peut présenter un diamètre interne supérieur au diamètre de la surface de bague des récipients que l'on souhaite contrôler à l'aide du dispositif. Dans un demi-plan radial contenant l'axe d'installation **A'1** et délimité par cet axe d'installation, une telle source lumineuse annulaire correspondrait à une source qui peut être ponctuelle, ou qui au contraire peut avoir une certaine étendue radiale dans ce demi-plan comme illustré sur les figures. Cette source lumineuse éclaire en direction de la zone d'installation, donc en direction de l'axe d'installation, mais en formant avec celui-ci un angle de manière à éclairer vers le bas. Si cette source n'est pas une source émettant des rayons parallèles, elle émet de préférence, dans ce demi-plan radial, un cône lumineux contenant des rayons radiaux selon un éventail continu ou sensiblement continu. Cet éventail peut par exemple former un secteur angulaire s'étendant entre 0 et 40 degrés par rapport à un plan perpendiculaire à l'axe central théorique. L'étendue angulaire de l'éventail est de préférence limité par un ou plusieurs caches, qui peuvent par exemple comprendre un diaphragme, pour que les rayons incidents ne puissent pas impacter directement une surface cylindrique externe de la bague **12,** située en-dessous du bord externe **17,** ni des filets portés par une telle surface cylindrique externe.

Dans l'exemple de la **Fig. 9**, la source lumineuse **28'** est annulaire et agencée juste en dessous de l'élément optique de vision périphérique **22**, ici en-dessous de la première surface primaire de réflexion. Elle pourrait aussi être agencée autour de l'élément optique de vision périphérique **22**.

Dans la mesure où la source lumineuse **28'** est annulaire, on peut l'assimiler à une multitude de sources, éventuellement ponctuelles ou quasi ponctuelles, agencées autour de l'axe d'installation **A'1** et émettant chacune un éventail de lumière telle que défini ci-dessus. De préférence, la source lumineuse est continue sur toute la périphérie à 360° autour de l'axe d'installation, au sens que, dans chaque demi-plan radial, elle émet le même éventail lumineux. Cependant, dans la réalité, la source lumineuse n'est généralement pas parfaitement continue. Il se peut aussi qu'elle soit interrompue sur un secteur angulaire, de préférence limité, autour de l'axe **A'1.** Il se peut par ailleurs que la source lumineuse ne soit pas continue, au sens qu'elle serait formée par une série de sources individuelles juxtaposées, discrètes, par exemple formée par une série de diodes électroluminescentes.

En général, la source lumineuse **28, 28'** comporte une série de sources individuelles juxtaposées, discrètes, par exemple formée par une série de diodes électroluminescentes, ces sources individuelles juxtaposées étant associées à un diffuseur de telle sorte que la source lumineuse délivre alors un éclairage qui peut être considéré comme continu et diffus.

Le spectre de lumière délivré par la source lumineuse **28** peut être monochromatique ou polychromatique, par exemple s'étendant sur une plage de longueurs d'ondes. Le spectre de lumière délivré par la source lumineuse **28** comprend de préférence des longueurs d'ondes dans le domaine visible.

Dans une variante préférée, la source lumineuse **28** comprend des diodes électroluminescentes blanches, dont le spectre d'émission couvre l'étendue du domaine visible.

Dans l'invention, on forme, avec les rayons réfléchis, au moins une image de la surface de bague du récipient, sur le capteur **18,** comme cela est illustré sur la **Fig. 8****.**

Grâce à l'observation de la surface de bague **16**, y compris le bord interne de la surface de bague, par le système optique selon le premier champ d'observation périphérique on recueille sur le capteur photoélectrique bidimensionnel, dans une première zone annulaire du capteur, pour former une première zone d'image, dans l'exemple numérique, bidimensionnelle **ZI1** :
- certains des rayons lumineux incidents réfléchis, selon le premier champ d'observation périphérique ayant le angle d'élévation d'observation **γ1,** par la surface de bague, pour former dans ladite première zone **ZI1,** un premier cercle principal **CP1** ;
- et, éventuellement, si une bavure est présente au niveau du bord interne, des rayons réfléchis, selon le premier champ d'observation périphérique ayant le premier angle d'élévation d'observation **γ1,** par le bord interne de la surface de bague ou par une bavure à l'endroit du bord interne, formant dans ladite première zone d'image, au moins un premier arc de cercle secondaire **CS1** concentrique au premier cercle principal **CP1**, et décalé radialement par rapport à celui-ci.

La première zone d'image **ZI1** dans laquelle on peut s'attendre à trouver le premier cercle principal **CP1** et un éventuel premier arc de cercle secondaire **CS1** est ici une zone annulaire. Suivant la transformation optique opérée par le système optique **24**, le cercle secondaire **CS1** peut se trouver radialement à l'extérieur au premier cercle principal **CP1**, comme dans l'exemple de la **Fig. 8**, ou au contraire à l'intérieur de celui-ci.

Le premier cercle principal **CP1** correspond à une portion de la surface de bague formée des points qui présentent une normale telle qu'il existe au moins un rayon incident qui, par réflexion spéculaire en ce point, est réfléchi, après réflexion sur la première surface primaire de réflexion **261,** selon un rayon d'observation du premier champ d'observation périphérique. Suivant la configuration du faisceau lumineux incident, notamment en fonction de l'étendue de la source lumineuse **28,** du caractère diffus ou non de la source lumineuse, et du profil de la surface de bague vue en coupe dans un demi-plan radial, l'épaisseur du premier cercle **CP1** sera plus ou moins importante. En effet, en fonction de ces paramètres, il y aura, dans un demi-plan radial donné, un ou plusieurs points de la surface de bague qui permettront la réflexion d'un rayon incident en direction du capteur au travers du système optique **24**. En revanche, notamment si la surface de bague présente un profil bombé, certaines parties de la surface de bague ne sont pas visibles dans l'image de la surface de bague, faute de renvoyer des rayons réfléchis selon le premier champ d'observation périphérique ayant.

Avec un dispositif tel que décrit précédemment, le premier cercle principal **CP1** est généralement continu sur 360° si la surface de bague ne présente pas d'autre défaut qu'une éventuelle bavure à l'endroit de son bord interne.

On peut prendre la convention que le centre du premier cercle principal **CP1** détermine un axe central **A"1** de l'image, cet axe étant l'image de l'axe central théorique **A1** de la surface de bague.

Pour déterminer la présence d'une bavure à l'endroit du bord interne de la surface de bague, le procédé comprend par exemple :
- la recherche, dans ladite première zone d'image **ZI1,** du premier cercle principal **CP1** ;
- la recherche, dans ladite première zone d'image **ZI1**, d'un éventuel arc de cercle secondaire **CS1** concentrique au premier cercle principal **CP1** et décalé radialement par rapport à celui-ci.

Toutefois, dans l'exemple illustré sur la **Fig. 8**, on s'aperçoit que la première zone image **Z11** présente deux cercles concentriques complets à 360°, alors que le récipient observé présente une bavure qui ne s'étend que sur approximativement la moitié d'un cercle. L'explication de ce phénomène est la suivante.

La **Figure 2** illustre un rayon incident **RI** émis par la source lumineuse, qui est réfléchi par un point sommital **S** d'une bavure située à l'endroit du bord interne de la surface de bague en un rayon réfléchi **RR1** qui est intercepté par la première surface primaire de réflexion **261**, en un point **RS1** et ainsi réfléchi vers le capteur par le système optique. Comme vu plus haut, on considère que le point **S** est le point localement le plus haut du profil de la bavure dans le demi-plan radial correspondant. Dans la pratique une bavure comporte presque toujours une arête vive de sorte qu'il existe un point très proche du point le plus haut, au point qu'on peut les considérer confondus, capable de renvoyer un rayon incident selon l'angle d'élévation d'observation.

Entre le point **S** de la bavure et la première surface de réflexion **261,** le rayon **RR1** se propage selon un rayon d'observation du premier champ d'observation périphérique. Toutefois, si l'on prolonge la direction du rayon **RR1,** dans sa portion comprise entre son point de réflexion **RS1** sur la première surface de réflexion **261** et la bague, au-delà du point sommital **S** de la bavure, on voit que cette direction qui correspond à un rayon d'observation vient impacter un point **S'** de la bague de la bouteille qui est susceptible de réfléchir un rayon incident lumineux selon ce même rayon d'observation. Autrement dit, le point **S**' de la bague, ici par exemple un point du bord périphérique externe inférieur de la bague, parfois nommé « surface de contre-bague » ou « bas de bague », est susceptible de se réfléchir sur le même point de réflexion **RS1** sur la première surface de réflexion **261,** de telle sorte que le point **S** et le point **S'** seront confondus dans l'image formée sur le capteur et donc dans l'image numérique. En général, ce raisonnement s'applique à 360° autour de l'axe d'installation. Dans le cas présent, le point **S'** appartient à un bord périphérique circulaire qui s'étend à 360° autour de l'axe **A1** de telle sorte qu'il apparaît sur l'image un reflet parasite **RP,** ici sous la forme d'un cercle, qui se trouve en partie confondu avec le premier arc de cercle secondaire **CS1.** On comprend donc que, pour ce cas particulier de récipient **14,** du fait de la géométrie particulière de la bague, et du fait de l'angle d'élévation d'observation particulier déterminé par la première surface de réflexion **261,** l'image obtenue par le dispositif peut ne pas s'avérer satisfaisante pour déterminer efficacement la présence ou non d'une bavure.

À ce stade, on remarque que ce cas particulier dans lequel un reflet parasite empêche la bonne détermination de la présence d'une bavure n'est qu'un cas particulier. Dans de nombreux cas, un dispositif comportant une unique surface primaire de réflexion telle que décrite ci-dessus permettra, pour de nombreux récipients, de faire une détection tout à fait performante de la présence d'une bavure à l'endroit d'un bord interne de la surface de bague. En effet, en l'absence de reflets parasites, cette détermination se fera par analyse comparative du premier cercle principal et du premier arc de cercle secondaire de la même manière que ce qui sera décrit plus loin en relation avec un second cercle principal et un second arc de cercle secondaire formés dans une deuxième zone d'image.

Cependant, lorsque apparaissent, selon le premier champ d'observation périphérique ayant le premier angle d'élévation d'observation **γ1,** des rayons parasites réfléchis par une portion d'une paroi de la bague, distincte de la surface de bague **16** et distincte de son bord interne, qui forment des images parasites dans la première zone d'image **ZI1,** notamment des arcs de cercles similaires à ceux produits par le bord interne ou une bavure, on peut avantageusement prévoir de modifier l'angle d'élévation d'observation **γ1** en une valeur **γ2** d'angle d'élévation d'observation différente.

L'angle d'élévation d'observation peut être modifié en remplaçant au moins un composant du système optique **24,** notamment en remplaçant la première surface de réflexion primaire. On pourrait ainsi prévoir un dispositif dans lequel l'élément optique de vision périphérique **22,** comportant la première surface de réflexion primaire **261,** est interchangeable avec d'autres éléments optiques de vision périphérique qui présenteraient une surface de réflexion primaire déterminant un autre angle d'élévation d'observation différent. Cependant, le remplacement d'un élément optique par un autre est une procédure qui peut s'avérer complexe et qui peut nécessiter des réglages d'alignement.

C'est pourquoi, dans une variante perfectionnée, l'invention prévoit l'observation de la surface de bague **16,** ainsi que du bord interne de la surface de bague, par au-dessus, par le système optique **24,** selon un deuxième champ d'observation périphérique déterminé par la deuxième surface de réflexion primaire **262**.

Grâce à cette deuxième surface de réflexion primaire **262**, on recueille, sur le même capteur photoélectrique bidimensionnel **18**, dans une deuxième zone annulaire du capteur, pour former une deuxième zone d'image numérique bidimensionnelle **ZI2** :
- certains des rayons lumineux incidents réfléchis, selon le deuxième d'observation périphérique ayant le deuxième angle d'élévation d'observation **γ2**, par la surface de bague, formant, dans ladite deuxième zone d'image **ZI2,** un deuxième cercle principal **CP2** ;
- et, éventuellement, des rayons réfléchis selon le deuxième champ d'observation périphérique ayant le deuxième angle d'élévation d'observation **γ2** par le bord interne **15** de la surface de bague **16** ou par une bavure à l'endroit du bord interne, formant dans ladite deuxième zone d'image, au moins un deuxième arc de cercle secondaire **CS2,** concentrique au deuxième cercle principal **CP2**, et décalé radialement par rapport à celui-ci.

Sur la **Fig. 2**, on voit que le rayon incident **RI** est réfléchi par le point sommital **S** en un deuxième rayon réfléchi **RR2** qui est intercepté par la deuxième surface primaire de réflexion **262,** en un point **RS2** et ainsi réfléchi vers le capteur **18** par le système optique **24**. Dans cet exemple, si l'on prolonge la direction du deuxième rayon réfléchi **RR2,** au-delà du point sommital **S** de la bavure, on voit que cette direction, qui correspond à un rayon d'observation, vient impacter la bague de la bouteille en des points qui ne sont pas susceptibles de réfléchir un rayon incident lumineux selon ce même rayon d'observation. Ainsi, ce rayon d'observation n'est pas affecté par une image parasite. Avantageusement, cela est vrai à 360° autour de l'axe de l'installation.

Par conséquent, comme on le voit dans la **Fig. 8****,** grâce à cette modification de l'angle d'élévation d'observation, on peut très clairement distinguer, dans la deuxième zone d'image **ZI2,** le deuxième cercle primaire principal **CP2** et le deuxième arc de cercle secondaire **CS2.** Le qualificatif de « deuxième » qui est utilisé ici pour le deuxième cercle principal et le deuxième arc de cercle secondaire dérive de ce qu'ils se trouvent dans la deuxième zone d'image, correspondant au deuxième angle d'élévation d'observation.

La deuxième zone d'image **ZI2** dans laquelle on peut s'attendre à trouver le deuxième cercle principal **CP2** et un éventuel deuxième arc de cercle secondaire **CS2** est ici une zone annulaire. Suivant la transformation optique opérée par le système optique **24,** le deuxième arc de cercle secondaire **CS2** peut se trouver radialement à l'extérieur du deuxième cercle principal **CP2,** comme dans l'exemple de la **Fig. 8**, ou au contraire à l'intérieur de celui-ci.

Le deuxième cercle principal **CP2** correspond à une deuxième image d'une portion de la surface de bague formée des points qui présentent une normale telle qu'il existe au moins un rayon incident qui, par réflexion spéculaire en ce point, est réfléchi, après réflexion sur la deuxième surface primaire de réflexion **262,** selon un rayon d'observation du deuxième champ d'observation périphérique. Comme pour le premier cercle principal **CP1,** l'épaisseur du deuxième cercle **CP2** sera plus ou moins importante, et il est généralement continu sur 360° si la surface de bague ne présente pas d'autre défaut qu'une éventuelle bavure à l'endroit de son bord interne.

Pour déterminer la présence d'une bavure à l'endroit du bord interne de la surface de bague, le procédé comprend par exemple :
- la recherche, dans ladite deuxième zone d'image **ZI2,** du deuxième cercle principal **CP2;**
- la recherche, dans ladite deuxième zone d'image **ZI2,** d'un éventuel deuxième arc de cercle secondaire **CS2** concentrique au deuxième cercle principal **CP2** et décalé radialement par rapport à celui-ci.

Dans l'image numérique globale, le premier et le deuxième cercle principal et le premier et le deuxième arc de cercle secondaire peuvent être repérés par une valeur de luminosité supérieure à une valeur de luminosité du fond de l'image.

Que ce soit pour la première zone d'image ou la deuxième zone d'image, on considère que, en l'absence de bavure à l'endroit du bord interne, le bord interne présente alors sa géométrie nominale. Dans ce cas, on trouvera, ou pas, un arc de cercle secondaire correspondant éventuellement à ce bord interne. Cela dépendra notamment de la géométrie nominale de ce bord interne, en fonction de laquelle des rayons incidents seront réfléchis, ou pas, en direction de la surface primaire de réflexion. Si le bord interne de géométrie nominale réfléchit des rayons incidents en direction du capteur avec réflexion sur la surface primaire correspondante, alors il est possible que l'arc de cercle secondaire correspondant au bord interne s'étende sur 360°. Si on contraire le bord interne de géométrie nominale ne réfléchit pas les rayons incidents en direction du capteur, alors il n'y aura pas d'arc de cercle secondaire visible dans la zone d'image correspondante.

On comprend donc qu'il y a un intérêt, pour limiter les cas dans lesquels des reflets parasites pourraient affecter la précision de la détermination de la présence d'un défaut de type bavure, à prévoir l'observation de la surface de bague et de son bord interne selon deux angles d'élévation d'observation différents.

De préférence, ces deux angles d'élévation d'observation sont obtenus grâce à deux surfaces primaires de réflexion distinctes agencées simultanément sur le dispositif et générant ces deux angles.

Dans une variante, on prévoit que ces deux surfaces primaires de réflexion sont agencées simultanément sur le dispositif et que, par une opération de déplacement relatif entre le récipient et le système optique, on puisse former une image de la surface de bague et de l'éventuelle bavure soit par l'intermédiaire de la première surface de réflexion primaire **261**, soit par l'intermédiaire de la deuxième surface de réflexion primaire **262**, mais pas les deux en même temps. Cette variante est illustrée notamment sur les **Figs 5****,** **6** et **7****.**

Sur la **Fig. 5****,** on a illustré en effet le capteur **18,** l'objectif **20,** ici schématisé sous la forme d'une lentille, l'élément optique **22** comportant la première surface primaire de réflexion **261** et la deuxième surface primaire de réflexion **262,** la source lumineuse centrale **28** et le récipient **14,** qui présentent les caractéristiques décrites plus haut.

La première surface primaire de réflexion **261** et la deuxième surface primaire de réflexion déterminent pour le capteur respectivement une première portion de champ de vision aval **CAV1** et une deuxième portion de champ de vision aval **CAV2.** La première et la deuxième portion de champ de vision aval comprennent l'ensemble des points de l'espace de la zone d'installation pour lesquels une image est formée sur le capteur **18** par le système optique, respectivement après réflexion sur la première ou la deuxième surface primaire de réflexion. En section par un plan perpendiculaire à l'axe d'installation, ces portions de champ de vision aval **CAV1, CAV2** sont annulaires. Depuis la surface primaire de réflexion correspondante, ces portions de champs de vision aval sont dirigées vers le bas, centripètes en direction de l'axe d'installation de manière à former un tronc de cône annulaire ayant un demi-angle au sommet complémentaire de l'angle d'élévation d'observation.

On comprend que, pour que soit formée une image de la surface de bague **16** par réflexion sur l'une ou l'autre des deux surfaces primaires de réflexion, il faut que la surface de bague soit installée dans la portion de champ de vision aval **CAV1, CAV2** correspondante.

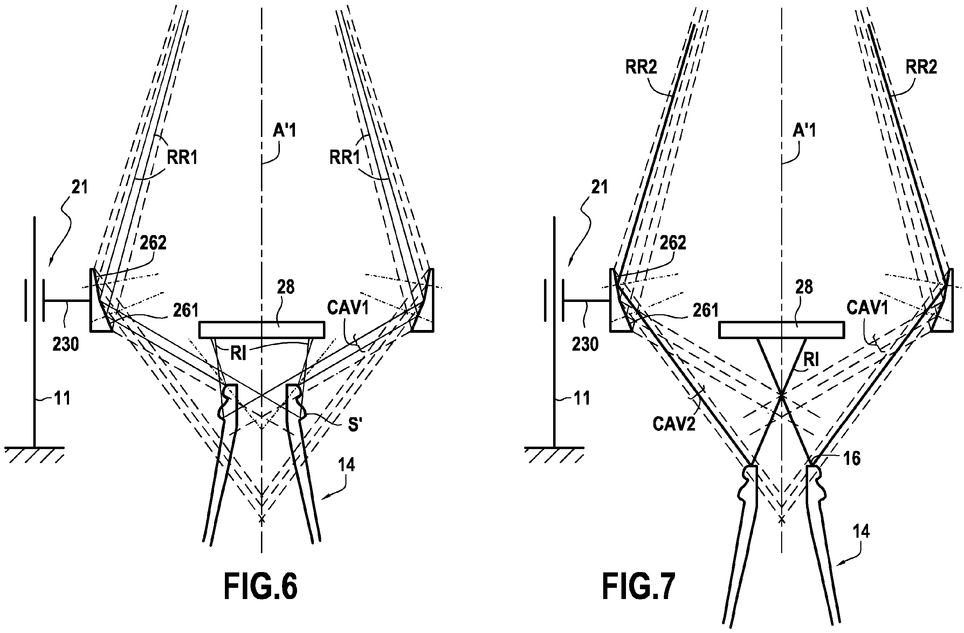

Comme on l'a illustré sur les **Figs. 6** et **7****,** ce mode de réalisation est tel qu'il n'existe pas de zone d'inspection commune dans laquelle les deux portions de champ de vision aval **CAV1, CAV2** se recouperaient et dans laquelle la surface de bague pourrait être reçue.

Au contraire, on voit dans la **Fig. 6** que le récipient **14** doit être placé dans une première position axiale par rapport au dispositif **10** pour que la surface de bague **16** soit comprise dans la première portion de champ de vision aval **CAV1** qui est déterminée par la première surface de réflexion primaire **261.** Dans cette position, seul le premier cercle principal et un éventuel premier cercle secondaire sont formés dans l'image globale. Dans l'exemple illustré, on s'aperçoit qu'au moins un des rayons d'observation du premier champ d'observation périphérique est susceptible d'intercepter un rayon incident réfléchi par une surface externe S' de la bague qui n'est pas celle que l'on souhaite détecter. Il s'agit donc d'un reflet parasite et qui va générer une image parasite dans l'image produite après réflexion sur la première surface primaire de réflexion **261**.

À la **Fig. 7**, on voit que le récipient **14** occupe, par rapport au dispositif **10,** une deuxième position axiale, décalée selon la direction de l'axe d'installation par rapport à la première, pour que la surface de bague **16** soit comprise dans la deuxième portion de champ de vision aval **CAV2,** qui est déterminée par la deuxième surface de réflexion primaire **262**. Dans cette deuxième position, le même récipient ne génère pas de reflet parasite qui serait visible selon le deuxième champ d'observation périphérique, qui serait susceptible de créer une image parasite. Dans cette position, seul le deuxième cercle principal et un éventuel deuxième cercle secondaire sont formés dans l'image globale.

Le déplacement relatif du récipient par rapport au dispositif peut être créé par exemple en prévoyant que le dispositif, ou une partie de celui-ci, est monté par l'intermédiaire d'un support **230** qui peut être mobile, par exemple au moyen d'une glissière **21,** sur un châssis **11** occupant une position fixe par rapport à un dispositif de convoyage de récipient. En déplaçant le dispositif d'inspection **10**, ou une partie de celui-ci, le long de la glissière on peut régler par translation la position relative du dispositif, et donc du système optique, par rapport à la surface de bague d'un récipient dans la zone installation. On peut aussi prévoir que les récipients soient convoyés par un dispositif de convoyage réglable en hauteur au niveau d'un poste d'inspection comportant le dispositif d'inspection.

Avec un tel dispositif, on assure une observation simultanée de la surface de bague, par le système optique **24,** selon le premier champ d'observation périphérique ayant le premier angle d'observation **γ1** et selon le deuxième champ d'observation périphérique ayant le deuxième angle d'observation **γ2** car les deux surfaces de réflexion sont contenues dans des portions disjointes du champ de vision amont du capteur. Cependant, avec un tel dispositif, on doit procéder au réglage, par translation relative selon l'axe central théorique, de la position relative du système optique par rapport à la surface de bague du récipient, de manière à permettre la formation d'une image bidimensionnelle de la surface de bague du récipient et de son bord interne soit dans la première zone d'image **ZI1** correspondant à l'observation selon le premier le deuxième champ d'observation périphérique ayant le premier angle d'observation **γ1**, soit dans la deuxième zone d'image **ZI2** correspondant à l'observation selon le deuxième champ d'observation périphérique ayant le deuxième angle d'observation **γ2.**

Dans ce cas, dans une image numérique globale **IG** donnée, délivrée par le capteur **18**, on trouve une seule image de la surface de bague et une seule image de l'éventuelle bavure, dans l'une ou l'autre des deux zones d'image.

On notera que le déplacement relatif entre le système optique et la surface de bague est de préférence réalisé en conservant les positions relatives du système optique et des éléments qui le composent par rapport au système objectif **20**, au capteur **18**, et à la source lumineuse **28**. Dans ce cas, on déplace le récipient **14** par rapport au dispositif **10** selon la direction de l'axe d'installation **A'1.** Cependant, en variante, il est possible, au moins dans certains modes de réalisation, que le déplacement relatif entre la caméra **19** et le système optique et la surface de bague implique aussi un déplacement relatif entre la caméra **19** et l'élément optique de vision périphérique **22** qui porte les surfaces primaires de réflexion.

Dans tous les cas, sur la base d'une image globale acquise grâce à un tel dispositif, on pourra alors déterminer la présence ou non d'une bavure en recherchant, dans une image globale acquise grâce au capteur **18**, un cercle principal et au moins un arc de cercle secondaire, soit dans la première zone d'image **ZI1** soit dans la deuxième zone d'image **ZI2**.

Dans un tel système, on pourrait certes prévoir, pour chaque récipient, d'acquérir deux images globales correspondant chacune à l'une des positions relatives du récipient **14** du dispositif **10**. Cependant on conçoit que cela ne serait pas optimal. En réalité, on comprend que les problèmes de reflet parasites que l'on peut rencontrer avec l'un ou l'autre des champs d'observation périphériques sont intrinsèquement liés à la géométrie du récipient. Sur une ligne d'inspection, de fabrication, de convoyage ou de conditionnement de récipient, les récipients sont généralement tous de même type, présentant la même géométrie, au moins pour une période de temps significative. Aussi, avec un tel dispositif ne permettant pas la formation simultanée, dans une même image globale, d'une image de la surface de bague et d'une éventuelle bavure selon le premier champ d'observation périphérique, et d'une image de la surface de bague et d'une éventuelle bavure selon le deuxième champ d'observation périphérique, on procédera de préférence, en début d'inspection d'une série de récipient, à une étape de prédétermination de l'angle d'élévation d'observation à utiliser pour un type de récipient donné. Cette étape de prédétermination peut être réalisée manuellement par un opérateur qui appréciera l'éventuelle présence de reflets parasites susceptibles de gêner l'inspection. Par exemple, en comparant une image prise selon le premier champ d'observation périphérique et une image prise selon le second champ d'observation périphérique, on pourra déterminer laquelle des deux images donnera les résultats d'inspection les plus fiables. Cette comparaison peut aussi être faite automatiquement, par analyse informatique de ces deux images. Sur la base de cette analyse, on peut alors choisir l'un ou l'autre des angles d'élévation d'observation et régler la position relative du dispositif par rapport au récipient en début d'inspection pour la garder pendant toute l'inspection de la série de récipients de géométries identiques.

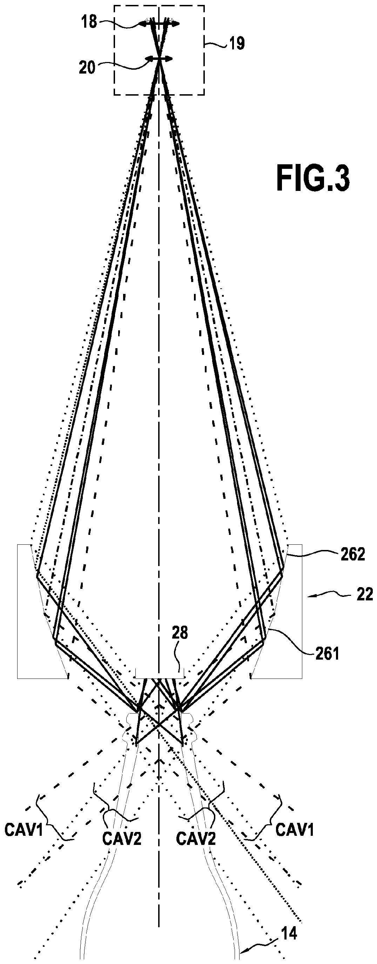

Toutefois, dans un mode de réalisation préféré de l'invention, comme celui illustré à la **Fig. 2****,** à la **Fig. 3** et à la **Fig. 4****,** les deux surfaces de réflexion primaires sont choisies et agencées par rapport au dispositif de telle sorte que le système optique forme simultanément, sur le capteur **18**, deux images séparées dans deux zones distinctes du capteur, de manière que celui-ci délivre une image globale comprenant deux zones d'images distinctes, chaque zone d'image distincte comportant une image de la surface de bague et une image d'une éventuelle bavure formées à partir des rayons recueillis selon le champ d'observation périphérique ayant l'angle d'élévation d'observation déterminé par la surface primaire de réflexion correspondante.

Une telle image globale est notamment celle qui est illustrée à la **Fig. 8****.**

Ainsi, le dispositif des **Figs. 2****,** **3** et **4** permet l'observation simultanée de la surface de bague **16**, y compris le bord interne de la surface de bague, par le système optique **24, 124,** selon le premier champ d'observation périphérique et le deuxième champ d'observation périphérique. Ainsi, cela permet la formation simultanée, à partir des rayons réfléchis recueillis selon les premier et deuxième champs d'observation périphériques, par l'intermédiaire du système optique **24** d'une image bidimensionnelle **CP1, CP2** de la surface de bague du récipient et **CS1, CS2** de son bord interne simultanément à la fois dans la première zone d'image **ZI1** correspondant à l'observation selon le premier champ d'observation périphérique ayant le premier angle d'observation **γ1** et dans la deuxième zone d'image **Z2** correspondant à l'observation selon le deuxième champ d'observation périphérique ayant le deuxième angle d'observation **γ2**, sur le même capteur bidimensionnel **18,** la première zone d'image et la deuxième zone d'image étant disjointes.

Dans ce cas, on disposera donc, pour chaque récipient, d'une image globale comportant deux zones d'image comportant chacune une image de la surface de bague et d'une éventuelle bavure, sous deux angles d'élévation d'observation différents. Cette image globale **IG** est de préférence acquise lors d'un unique temps d'acquisition du capteur d'image **18.**

Pour cela, l'élément optique de vision périphérique **22** qui comporte la première surface primaire de réflexion et la deuxième surface de réflexion est conçu pour que ces deux surfaces déterminent, pour le capteur, respectivement une première portion de champ de vision aval annulaire **CAV1** et une deuxième portion de champ de vision aval annulaire **CAV2** qui se recoupent dans une zone d'inspection commune dans la zone d'installation. Cette zone d'inspection commune est une zone de l'espace comportant l'ensemble des points qui peuvent être reçus par le capteur **18** au travers du système optique **24** à la fois après réflexion sur la première surface primaire de réflexion **261** et après réflexion sur la seconde surface primaire de réflexion **262**. La géométrie de la zone d'inspection commune doit être adaptée pour pouvoir recevoir la surface de bague d'un récipient à inspecter.

De préférence, on optimisera la première surface primaire de réflexion et la seconde surface primaire de réflexion de telle sorte que les deux images de la surface de bague et d'une éventuelle bavure obtenues d'une part par réflexion sur la première surface primaire de réflexion **261** et d'autre part par réflexion sur la deuxième surface primaire de réflexion **262**, soit nettes pour un même réglage de mise au point du dispositif.

Notamment, on prévoira que la première surface primaire de réflexion et la deuxième surface primaire de réflexion sont positionnées en :
- considérant un point **S** de la surface de bague **16** agencée dans la zone d'inspection commune ;
- considérant un premier chemin optique **RR1** suivi, entre le point **S** considéré et le capteur **18**, par un rayon incident **RI** réfléchi en ce point considéré **S** de la surface de bague selon le premier champ d'observation périphérique ayant le premier angle d'élévation d'observation puis réfléchi en direction du capteur sur la première surface primaire de réflexion **261**; et
- considérant un deuxième chemin optique **RR2** suivi, entre le point considéré **S** et le capteur **18,** par un rayon incident réfléchi en ce point considéré **S** de la surface de bague selon le deuxième champ d'observation périphérique ayant le deuxième angle d'élévation d'observation et réfléchi en direction du capteur sur la deuxième surface primaire de réflexion **262**.

Dans ce cas, la différence de longueur entre le premier chemin optique et le second chemin optique est inférieure à la valeur de profondeur de champ de la caméra **19** lorsque le système optique est mis au point sur la surface de bague.

De manière connue, la profondeur de champ est représentée par l'ensemble des points contenus entre deux plans perpendiculaires à l'axe optique du système optique pour lesquels les points sont vus nets pour une mise au point donnée du système optique. La valeur de profondeur de champ correspond à la distance entre ces deux plans.

Cette propriété permet d'obtenir une netteté optimale dans les deux zones d'images **ZI1**, **ZI2,** avec le même réglage de mise au point du système optique **24**.

Une manière d'obtenir cette propriété est de prévoir que la première surface primaire de réflexion et la deuxième surface primaire de réflexion sont, selon un plan de coupe radial contenant l'axe central d'installation, tangentes à un ellipsoïde dont les foyers sont agencés sur l'axe d'installation **A'1**. Un premier foyer de l'ellipsoïde est agencé au niveau du centre **CO** de la pupille d'entrée du système objectif **20**. Le second foyer de l'ellipsoïde est agencé sur l'axe central d'installation **A'1**, au niveau de la bague **12** du récipient à inspecter. Compte-tenu de la valeur de profondeur de champ pour les systèmes optiques utilisés dans le domaine de l'invention, il existe une tolérance quant à la position exacte des foyers, notamment selon la direction de l'axe d'installation.

Dans l'hypothèse où l'on inspecte une série de récipient de géométries identiques, on pourra prévoir d'utiliser une seule des deux images, après une étape de prédétermination comprenant par exemple la sélection, pour au moins une série de récipients de même type, d'une zone d'image préférentielle parmi la première et la deuxième zone d'image, de la même manière que cela a été vu plus haut en relation au mode de réalisation précédent. Dans ce cas, l'analyse d'une image, en vue de déterminer la présence d'une bavure à l'endroit du bord interne du récipient correspondant, peut comprendre la recherche, pour ladite série de récipients, dans la zone d'image préférentielle, du cercle principal continu et de l'arc de cercle secondaire correspondants.

Cependant, dans la mesure où l'on dispose, pour chaque récipient à inspecter, d'une image globale comportant deux zones d'image comportant chacune une image de la surface de bague et d'une éventuelle bavure, selon deux champs d'observation périphériques différents ayant deux angles d'élévation d'observation différents, l'analyse d'une image, en vue de déterminer la présence d'une bavure à l'endroit du bord interne du récipient correspondant, peut comprendre la recherche, pour ledit récipient, dans la première zone et dans la deuxième zone d'image, du premier et du deuxième cercle principal continu et du premier et du deuxième arc de cercle secondaire correspondants à ce dit récipient. On obtient ainsi, pour un même récipient, des informations tirées de l'observation sous deux angles d'élévation d'observation différents. Cette redondance permet de confirmer la présence des défauts. Ces informations permettent également, par exemple dans une opération de triangulation, de déterminer avec plus de précision et de confiance des informations concernant la géométrie de la bavure, par exemple sa hauteur et/ou sa position radiale par rapport à l'endroit supposé du bord interne.

Ce croisement des informations obtenues sous les deux champs d'observation périphériques ayant des angles d'élévation d'observation différents peut être réservé à certain récipients, par exemple des récipients présentant des caractéristiques de défaut particulières. Cependant, on peut mettre cela à profit non seulement pour un récipient donné, mais éventuellement pour toute une série de récipient de même type, présentant par exemple la même géométrie.

En vue de déterminer la présence ou non d'un défaut de type bavure pour un récipient donné, le procédé pourra comprendre la détermination, dans l'image, d'une distance radiale d'écartement entre un arc de cercle secondaire et le cercle principal le plus proche dans une zone d'image obtenue grâce à l'invention. On pourra alors déterminer la présence d'un défaut de type bavure lorsque ladite distance radiale d'écartement excède, pour au moins un rayon, une valeur de seuil.

Plus particulièrement, dans les modes de réalisation dans lesquels on forme une première zone d'image et une seconde zone d'image comprenant chacune l'image de la surface de bague et d'une éventuelle bavure à l'endroit de son bord interne, l'analyse de ces zones d'image pourra comprendre :
- la recherche dans la première zone d'image, du premier cercle principal et d'un premier arc de cercle secondaire et la détermination d'une première distance radiale d'écartement **D1** entre les deux ; la distance radiale d'écartement est par exemple, pour un arc, la valeur maximale de l'écartement radial entre les deux sur l'étendue angulaire de l'arc ;
- la recherche dans la deuxième zone d'image, du deuxième cercle principal et d'un deuxième arc de cercle secondaire, et la détermination d'une seconde distance radiale d'écartement **D2** entre les deux ;
- la mise en correspondance d'un premier et d'un deuxième arc de cercle secondaires trouvés respectivement dans la première et la deuxième zone d'image comme étant les deux images, sous le premier et deuxième champ d'observation périphérique, d'une même bavure ; une telle mise en correspondance, ou appariement, peut comprendre l'établissement par un algorithme que les deux arcs trouvés chacun dans une zone différente sont image du même objet ;
- la détermination par combinaison des distances radiales d'écartement **D1** et **D2** mesurées pour lesdits premier et deuxième arcs de cercle secondaires dans les deux zones d'image **ZI1, ZI2** afin de déterminer une valeur dépendante de la hauteur relative **dZ** de la bavure par rapport à la surface de bague ;
- la détermination de la présence d'une bavure lorsque la valeur dépendante de la hauteur relative **dZ** excède pour au moins une portion d'arc une valeur de seuil.

Dans les exemples de réalisation qui ont été décrits ci-dessus, chaque surface primaire de réflexion réfléchit directement les rayons lumineux en direction du capteur **18.** Cependant, en variante, on pourrait prévoir entre la ou les surface(s) primaire(s) de réflexion **261, 262** et le capteur **18,** au moins une surface de réflexion de renvoi. Dans ce cas, on considère que la surface primaire de réflexion **126** réfléchit les rayons lumineux indirectement en direction du capteur **18.** Une telle surface de réflexion de renvoi peut comporter une surface réfléchissante conique ou tronconique convexe, axée sur l'axe d'installation, tournée à l'opposé de l'axe d'installation, évasée vers le bas et de plus petit diamètre que la ou les surfaces primaires de réflexion.

On a illustré sur la **Figure 10** une ligne d'inspection **200** de récipients **14** mettant en œuvre un dispositif **10** selon l'invention. Dans l'exemple illustré, des récipients **14** sont déplacés par un convoyeur **210** qui transporte les récipients **14** selon une direction de déplacement, par exemple de translation horizontale perpendiculaire à l'axe central théorique **A1** des récipients **14**. Dans l'exemple illustré, le convoyeur **210** comporte un tapis convoyeur **212** sur lequel les récipients **14** sont posés par leur surface de fond, aussi appelé plan de pose, avec leur axe central théorique **A1** agencé verticalement. Le convoyeur pourrait comporter une roue de convoyage déplaçant les récipients **14** selon une trajectoire de déplacement circulaire, notamment dans un plan horizontal. Le convoyeur **210** pourrait aussi comporter des moyens de guidage (non représentés) coopérant avec les faces latérales des récipients **14**. Les récipients **14** présentent ainsi leur surface de bague **16** dans un plan horizontal tourné vers le haut. Le convoyeur **210** amène les récipients selon la trajectoire horizontale en dessous du dispositif **10** selon invention, sans risque d'interférence avec le dispositif **10.** Le dispositif **10** peut comprendre un support, par exemple en forme de boitier **230**, incorporant notamment le capteur **18**, le système objectif **20**, une source lumineuse **28**, une première surface de réflexion primaire **261** et éventuellement une deuxième surface de réflexion primaire de renvoi **262**. Le boîtier **230** est agencé au-dessus du convoyeur. À l'intérieur du boîtier **230**, un dispositif **10** selon l'invention est agencé avec son axe d'installation **A'1** en position verticale, de telle sorte que le champ d'observation et le faisceau lumineux incident sont orientés vers le bas, vers la zone d'installation **Z** qui se situe entre la face inférieure du boîtier **230** et le tapis convoyeur **212**. On comprend donc que, au niveau de cette station d'inspection, le convoyeur **210** amène les récipients de manière à ce que leur axe central théorique **A1** coïncide au mieux avec l'axe d'installation **A'1**. Au moment de cette coïncidence, une image est acquise grâce au dispositif **10**, sans que cela nécessite ni une manutention du récipient ni un arrêt du convoyeur. L'image acquise par le dispositif **10** peut ensuite être envoyée à un système de traitement **240,** par exemple un dispositif de traitement d'images et/ou un dispositif de visualisation et/ou un dispositif de stockage d'images, par exemple un système informatique comprenant un ordinateur. Il est alors possible d'analyser l'image ainsi acquise et de déterminer la présence ou non d'une bavure à l'endroit du bord interne de la surface de bague **16** du récipient **14.**

La caméra peut être déclenchée pour intégrer une image de manière synchronisée avec le déplacement des articles, notamment pour figer l'image au moment de l'alignement de l'axe théorique de bague **A1** avec l'axe d'installation **A'1**. Le temps d'intégration est prévu court, par exemple inférieur à 1ms, voire 400µs, afin de réduire le risque de flou de bougé dans les images.

La source de lumière peut être pulsée, c'est-à-dire produire l'éclairage pendant une durée brève de type flash, par exemple inférieure à 1ms, voire 400µm, afin de réduire le flou de bogué dans les images.

Il peut être prévu que système de traitement **240** coopère avec, ou inclut, une unité de commande, qui pilote la source de lumière et la caméra, afin de les synchroniser avec le déplacement des articles.

Le dispositif et le procédé sont donc sans contact physique avec le récipient à contrôler. Un dispositif selon l'invention se révèle moins onéreux et d'encombrement plus faible que les dispositifs de l'art antérieur, permettant notamment son installation aisée dans une station ou sur une ligne d'inspection d'articles, station ou ligne d'inspection qui peut comporter d'autres dispositifs destinés à d'autres contrôles, et le dispositif suivant l'invention peut ainsi être installé notamment dans une ligne de production où les récipients circulent à la chaine. Un tel dispositif permet alors le contrôle de récipients en ligne, que ce soit sur une ligne de production des récipients, ou sur une ligne de traitement des récipients, ou sur une ligne de remplissage, à grande vitesse.

Le dispositif et le procédé selon l'invention peuvent être mis en oeuvre avec un seul capteur photoélectrique bidimensionnel, par exemple une seule caméra, et tout de même donner une information fiable quant à la présence ou non d'une bavure à l'endroit du bord interne de la surface de bague, ceci à partir d'une seule image bidimensionnelle optique, directement acquise par le capteur, et non pas à partir de plusieurs images optiques acquises distinctement.

Le système d'observation selon l'invention est présenté ici dans des réalisations préférées dans lesquelles les surfaces réfléchissantes sont des miroirs. Il est envisageable d'obtenir les mêmes résultats en utilisant des éléments optiques de type prismes, présentant des surfaces également coniques par exemple, provoquant des réflexions totales. Un élément optique au sens de l'invention peut comporter une lentille de Fresnel. De tels moyens permettent également une observation avec les mêmes valeurs de l'angle **γ**, et on peut concevoir par ces moyens des observations télécentriques ou non.

L'invention n'est pas limitée aux exemples décrits et représentés car diverses modifications peuvent y être apportées sans sortir de son cadre tel que défini dans les revendications.

## Revendications

1. - Procédé de détermination de la présence d'une bavure de verre à l'endroit d'un bord interne (15) d'une surface de bague (16) d'une bague d'un récipient (14) en verre, la surface de bague ayant comme géométrie théorique une surface de révolution autour d'un axe central théorique (A1), du type comportant :
- l'éclairage de la surface de bague (16) du récipient par au-dessus, à l'aide d'un faisceau lumineux incident comprenant des rayons lumineux incidents (**RI**) radiaux contenus dans au moins un plan radial contenant l'axe central théorique (**A1**),lesdits rayons radiaux incidents s'écartant de l'axe central théorique (**A1**) au niveau de leur incidence sur la surface de bague, et certains des rayons radiaux du faisceau lumineux incident étant réfléchis par réflexion spéculaire sur la surface de bague (**16**), sous la forme de rayons réfléchis **(RR1, RR2)** ;
- la formation, avec les rayons réfléchis, d'au moins une image de la surface de bague du récipient, sur un capteur photoélectrique bidimensionnel (**18**), le procédé étant tel que :
- le faisceau lumineux incident comprend des rayons lumineux incidents radiaux contenus dans des plans radiaux répartis à 360° autour de l'axe central théorique (**A1**) ;
- le procédé comprend l'observation de la surface de bague (**16**), y compris le bord interne de la surface de bague, par au-dessus, par un système optique (**24, 261**), selon un premier champ d'observation périphérique qui observe la surface de bague (**16**) selon des premiers rayons d'observation radiaux qui sont contenus dans des plans radiaux contenant l'axe central théorique (**A1**),qui sont répartis à 360° autour de l'axe central théorique (**A1**), cette observation se faisant radialement depuis l'extérieur par rapport à la surface de bague, le premier champ d'observation périphérique ayant un premier angle d'élévation d'observation (**γ1**) par rapport à un plan perpendiculaire à l'axe central théorique (**A1**), de manière à recueillir sur le capteur photoélectrique bidimensionnel (18), dans une première zone annulaire du capteur, pour former une première zone d'image numérique bidimensionnelle (**ZI1**) :
∘ certains des rayons lumineux incidents réfléchis selon le premier champ d'observation périphérique (**γ1**) par la surface de bague, formant dans ladite première zone d'image (**ZI1**) annulaire, un cercle principal (**CP1**) correspondant à une portion de la surface de bague formée des points qui présentent une normale telle qu'il existe au moins un rayon incident qui, par réflexion spéculaire en ce point, est réfléchi, après réflexion sur une première surface primaire de réflexion (**261**) selon un rayon d'observation du premier champ d'observation périphérique ;
∘ et, éventuellement, des rayons réfléchis selon le premier champ d'observation périphérique (**γ1**) par le bord interne de la surface de bague ou par une bavure à l'endroit du bord interne, formant dans ladite première zone d'image, au moins un arc de cercle secondaire (**CS1**) concentrique au dit cercle principal, et décalé radialement par rapport à celui-ci ;
et tel que le procédé comprend :
∘ la recherche, dans ladite première zone d'image, du dit cercle principal (**CP1**) ;
∘ la recherche, dans ladite première zone d'image, d'un éventuel arc de cercle secondaire (**CS1**) concentrique au dit cercle principal et décalé radialement par rapport à celui-ci ;
- et tel que, lorsque apparaissent, selon le premier champ d'observation périphérique ayant le premier angle d'élévation d'observation (**γ1**), des rayons parasites réfléchis par une portion (**S'**) d'une paroi de la bague distincte de la surface de bague (**16**) et de son bord interne qui forment dans la première zone d'image (**ZI1**), des images parasites, on modifie l'angle d'élévation d'observation (**γ1**) en une valeur (**γ2**) différente.

2. - Procédé selon la revendication **1**, **caractérisé en ce que** l'angle d'élévation d'observation (**γ1, γ2**) est modifié en remplaçant au moins un composant (**261, 262**) du système optique (**24**).

3. - Procédé selon l'une quelconque des revendications **1** ou **2**, **caractérisé en ce que** :
- le procédé comprend l'observation de la surface de bague (**16**), ainsi que du bord interne de la surface de bague, par au-dessus, par un système optique (**24, 262**), selon un deuxième champ d'observation périphérique qui observe la bague (**16**) selon des seconds rayons d'observation radiaux qui sont contenus dans des plans radiaux contenant l'axe central théorique (**A1**), qui sont répartis à 360° autour de l'axe central théorique (**A1**), le deuxième champ d'observation périphérique ayant un deuxième angle d'élévation d'observation (**γ2**) par rapport à un plan perpendiculaire à l'axe central théorique (**A1**),mais différent du premier angle d'élévation d'observation (**γ1**), de manière à recueillir sur le même capteur photoélectrique bidimensionnel, dans une deuxième zone annulaire du capteur (**ZI2**), pour former une deuxième zone d'image numérique bidimensionnelle (**ZI2**) :
∘ certains des rayons lumineux incidents réfléchis selon le deuxième champ d'observation périphérique (**γ2**) par la surface de bague, formant, dans ladite deuxième zone d'image, un cercle principal (**CP2**) ;
∘ et, éventuellement, des rayons réfléchis selon le deuxième champ d'observation périphérique (**γ2**) par le bord interne de la surface de bague ou par une bavure à l'endroit du bord interne, formant dans ladite deuxième zone d'image, au moins un arc de cercle secondaire (**CS2**), concentrique au cercle principal (**CP2**), et décalé radialement par rapport à celui-ci ;
et **en ce que** le procédé comprend :
∘ la recherche, dans ladite deuxième zone d'image (**ZI2**), du cercle principal (**CP2**) ;
∘ la recherche, dans ladite deuxième zone d'image (**ZI2**), d'un éventuel arc de cercle secondaire (**CS2**) concentrique au cercle principal (**CP2**) et décalé radialement par rapport à celui-ci.

4. - Procédé de détermination selon la revendication **3**, **caractérisé en ce qu'**il comporte :
• l'observation simultanée, par le système optique (**24**, **261**, **262**), selon le premier champ d'observation périphérique ayant le premier angle d'observation (**γ1**) et selon le deuxième champ d'observation périphérique ayant le deuxième angle d'observation (**γ2**);
• le réglage par translation relative selon l'axe central théorique d'une position relative du système optique (24) par rapport à la surface de bague (16) du récipient, de manière à permettre la formation d'une image bidimensionnelle de la surface de bague du récipient et de son bord interne soit dans la première zone d'image (**Z1**) correspondant à l'observation selon le premier champ d'observation périphérique (**γ1**) soit dans la deuxième zone d'image (**Z2**) correspondant à l'observation selon le deuxième champ d'observation périphérique (**γ2**);
• la recherche d'un cercle principal (**CP1**, **CP2**) puis au moins d'un arc de cercle secondaire (**CS1**, **CS2**), soit dans la première zone d'image (**ZI1**) soit dans la deuxième zone d'image (**ZI2**).

5. - Procédé de détermination selon la revendication **3** ou la revendication **4**, **caractérisé en ce qu'**il comporte :
- l'observation simultanée de la surface de bague (**16**), y compris le bord interne de la surface de bague, par le système optique (**24**, **261**, **262**), selon le premier champ d'observation périphérique et selon le deuxième champ d'observation périphérique ;
- la formation simultanée, à partir des rayons réfléchis recueillis selon les premier et deuxième champs d'observation périphériques, par l'intermédiaire du système optique (**24**, **261**, **262**), d'une image bidimensionnelle de la surface de bague du récipient et de son bord interne simultanément à la fois dans la première zone d'image (**ZI1**) correspondant à l'observation selon le premier champ d'observation périphérique (**γ1**) et dans la deuxième zone d'image (**ZI2**) correspondant à l'observation selon le deuxième champ d'observation périphérique (**γ2**), sur le même capteur bidimensionnel (**18**), la première zone d'image et la deuxième zone d'image étant disjointes.

6. - Procédé selon l'une quelconque des revendications **4** ou **5**, **caractérisé en ce qu'**il comporte :
- la sélection, pour au moins une série de récipients de même type, d'une zone d'image préférentielle parmi la première et la deuxième zone d'image **(ZI1, ZI2)** ;
- la recherche, pour ladite série de récipients, dans la zone d'image préférentielle, du cercle principal continu et de l'arc de cercle secondaire correspondants.

7. - Procédé selon l'une des revendications **3** à **6**, **caractérisé en ce qu'**il comporte la recherche, pour au moins un récipient, dans la première zone d'image (**ZI1**), d'un premier cercle principal continu (**CP1**) et d'un premier arc de cercle secondaire (**CS1**) correspondants à ce dit récipient, et, dans la deuxième zone d'image (**ZI2**), d'un deuxième cercle principal continu (**CP2**) et d'un deuxième arc de cercle secondaire (**CS2**) correspondants à ce dit récipient.

8. - Procédé selon l'une des revendications **4** à **6**, **caractérisé en ce qu'**il comporte la recherche, pour chaque récipient d'au moins une série de récipients de même type, dans la première zone d'image (**ZI1**), d'un premier cercle principal continu (**CP1**) et d'un premier arc de cercle secondaire (**CS1**) correspondants à un récipient, et, dans la deuxième zone d'image (**ZI2**), d'un deuxième cercle principal continu (**CP2**) et d'un deuxième arc de cercle secondaire (**CS2**) correspondants à ce dit récipient.

9. - Procédé de détermination selon l'une quelconque des revendications précédentes, **caractérisé en ce que** la formation de la zone d'image bidimensionnelle (**ZI1**, **ZI2**) inclut la formation optique d'une image bidimensionnelle (**CP1, CP2**) complète et continue à 360° autour de l'axe central théorique (**A1**) de la surface de bague (**16**) sur le même capteur (**18**).

10. - Procédé de détermination selon l'une quelconque des revendications précédentes, **caractérise en ce que** le procédé comprend la détermination de la présence d'une bavure lorsqu'une distance radiale (**D1**, **D2**) d'écartement, entre un arc de cercle secondaire (**CS1, CS2**) et le cercle principal le plus proche (**CP1, CP2**), excède, pour au moins un rayon, une valeur de seuil.

11. - Procédé de détermination selon l'une quelconque des revendications précédentes, **caractérise en ce que** le procédé comprend :
▪ la détermination d'une distance radiale d'écartement entre un arc de cercle secondaire et le cercle principal le plus proche ; et
▪ la détermination de la présence d'une bavure lorsque ladite distance radiale d'écartement excède, pour au moins un rayon, une valeur de seuil.

12. - Procédé de détermination selon l'une quelconque des revendications **5**, **7** ou **8**, **caractérisé en ce que** le procédé comprend :
- la recherche dans la première zone d'image (**ZI1**), d'un premier cercle principal (**CP1**) et d'un premier arc de cercle secondaire (**CS1**) et la détermination d'une distance radiale d'écartement (**D1**) entre les deux ;
- la recherche dans la deuxième zone d'image (**ZI2**), d'un deuxième cercle principal (**CP2**) et d'un deuxième arc de cercle secondaire (**CS2**), et la détermination d'une distance radiale d'écartement (**D2**) entre les deux ;
- la mise en correspondance du premier et du deuxième arc de cercle secondaire trouvés respectivement dans la première et la deuxième zone d'image comme étant les deux images, selon le premier et deuxième champ d'observation périphérique, d'une même bavure ;
- la détermination par combinaison des distances radiales d'écartement (**D1**, **D2**) mesurées pour lesdits premier et deuxième arcs de cercle secondaires dans les deux zones d'image (**ZI1**, **ZI2**) afin de déterminer une valeur dépendante d'une hauteur relative (**dZ**) de la bavure par rapport à la surface de bague ;
- la détermination de la présence d'une bavure lorsque la valeur excède pour au moins une portion d'arc une valeur de seuil.

13. **-** Dispositif d'inspection de la présence d'une bavure de verre à l'endroit d'un bord interne d'une surface de bague (**16**) d'un récipient (**14**) en verre, la surface de bague ayant comme géométrie théorique une surface de révolution autour d'un axe central théorique (**A1**), du type dans lequel le dispositif (**10**) présente une zone d'installation (**Z**) d'une surface de bague (**16**) d'un récipient à inspecter, cette zone d'installation ayant un axe d'installation (**A'1**), du type comprenant :
- un système d'éclairage (**28**, **28'**) agencé au-dessus de la zone d'installation et apte à fournir un faisceau lumineux incident comprenant des rayons radiaux contenus dans au moins un plan radial contenant l'axe d'installation (**A'1**), lesdits rayons radiaux incidents s'écartant de l'axe d'installation (**A'1**) au niveau de leur incidence sur la surface de bague ;
- un capteur (**18**), relié à une unité d'analyse d'images ;
- un système optique (**24, 261, 262**) agencé au-dessus de la zone d'installation, interposé entre la zone d'installation et le capteur (**18**), et apte à former sur le capteur (**18**) une image (**CP1, CP2**) de la surface de bague (**16**) à inspecter (**14**) placée dans la zone d'installation ;
le dispositif étant tel que :
- le capteur est un capteur bidimensionnel d'image ;
- le faisceau lumineux incident est un faisceau comprenant des rayons lumineux incidents radiaux contenus dans des plans radiaux contenant l'axe d'installation (**A'1**) et répartis à 360° autour de l'axe d'installation (**A'1**) ;
- le système optique comporte au moins une première surface primaire de réflexion (**261**) dans un champ de vision amont du capteur, la première surface primaire de réflexion (**261**) étant une surface de révolution axée sur l'axe d'installation (**A'1**), tournée vers l'axe d'installation, et agencée pour réfléchir, directement ou indirectement, en direction du capteur (**18**) des rayons lumineux provenant de la zone d'installation selon des plans radiaux contenant l'axe d'installation (**A'1**) et selon un premier champ d'observation périphérique ayant un premier angle d'élévation d'observation (**γ1**) par rapport à un plan perpendiculaire à l'axe central d'installation (**A'1**);
- le dispositif comporte au moins une deuxième surface primaire de réflexion (**262**) dans le champ de vision amont du capteur (**18**), la deuxième surface primaire de réflexion étant une surface de révolution axée sur l'axe d'installation, tournée vers l'axe d'installation et agencée pour réfléchir directement ou indirectement en direction du capteur (**18**) des rayons lumineux, provenant de la zone d'installation selon des plans radiaux contenant l'axe d'installation (**A'1**) et selon un deuxième champ d'observation périphérique ayant un deuxième angle d'élévation d'observation (**γ2**) par rapport à un plan perpendiculaire à l'axe central d'installation (**A'1**), ledit deuxième angle d'élévation d'observation étant différent du premier angle d'élévation d'observation, la première surface primaire et la deuxième surface primaire de réflexion étant toutes deux dans des portions disjointes du champ de vision amont du capteur ;et
- la première surface primaire de réflexion (**261**) et la deuxième surface de réflexion (**262**) déterminent pour le capteur (**18**) respectivement une première portion de champ de vision aval (**CAV1**) et une deuxième portion de champ de vision aval (**CAV2**) qui se recoupent dans la zone d'inspection.

14. - Dispositif selon la revendication **13**, **caractérisé en ce que** la première surface primaire de réflexion (**261**) et la deuxième surface primaire de réflexion (**262**) sont tronconiques d'angles au sommet différents.

15. - Dispositif selon l'une quelconque des revendications **13** ou **14**, **caractérisé en ce que** la première surface primaire de réflexion (261) et la deuxième surface primaire de réflexion (**262**) sont, selon un plan de coupe radial contenant l'axe central d'installation (**A'1**), tangentes à un ellipsoïde dont un foyer est au centre de la pupille d'entrée d'un système objectif (**20**) d'une caméra (**19**) comprenant le capteur d'image (**18**) et dont le deuxième foyer est agencé sur l'axe central d'installation (**A'1**), au niveau de la bague (**12**) du récipient à inspecter.

16. - Dispositif selon l'une quelconque des revendications **13** à **15**, **caractérisé en ce que** le faisceau périphérique incident, comprend, dans un même plan radial, des rayons radiaux non parallèles.

17. - Dispositif selon l'une quelconque des revendications **13** à **16**, **caractérisé en ce que** le système d'éclairage comporte une source lumineuse (**28**) centrale au moins en partie contenue dans une enveloppe cylindrique de révolution ayant pour axe l'axe d'installation (**A'1**) et pour diamètre le diamètre du bord interne (**15**) de la surface de bague (**16**) à inspecter, ou une source lumineuse (**28'**) annulaire de révolution, axée sur l'axe d'installation (**A'1**), qui génère des rayons lumineux incidents radiaux qui impactent la surface de bague (**16**) après avoir intersecté l'axe d'installation (**A'1**).

18. - Ligne d'inspection (**200**) de récipients (**14**) présentant une surface de bague (**16**), du type dans laquelle des récipients (**14**) sont déplacés sur une ligne de convoyage par un convoyeur (**210**) qui transporte les récipients (**14**) selon une direction de déplacement horizontale perpendiculaire à un axe central théorique (**A1**) des récipients **14** qui présentent ainsi leur surface de bague (**16**) dans un plan horizontal tourné vers le haut, **caractérisée en ce que** l'installation comporte un dispositif (**10**) selon l'une quelconque des revendications **13** à **17**, qui est agencé sur l'installation avec son axe d'installation (**A'1**) en position verticale, de telle sorte que le champ d'observation et le faisceau lumineux incident sont orientés vers le bas, vers la zone d'installation (**Z**) qui se situe entre le dispositif et un organe de transport du convoyeur (**212**).

## Patentansprüche

1. Verfahren zur Bestimmung des Vorhandenseins eines Glasfehlers an der Stelle eines Innenrandes (15) einer Ringfläche (16) eines Rings eines Glasbehältnisses (14), wobei die Ringfläche als theoretische Geometrie eine Rotationsfläche um eine theoretische Mittelachse (A1) aufweist, von dem Typ, der aufweist:
- Beleuchten der Ringfläche (16) des Behältnisses von oben, mit Hilfe eines einfallenden Lichtbündels, das radiale einfallende Lichtstrahlen (RI) beinhaltet, die in zumindest einer radialen Ebene enthalten sind, welche die theoretische Mittelachse (A1) beinhaltet, wobei die einfallenden radialen Strahlen von der theoretischen Mittelachse (A1) auf Höhe ihres Einfalls auf die Ringfläche abweichen, und bestimmte der radialen Strahlen des einfallenden Lichtbündels durch Spiegelreflexion auf der Ringfläche (16) in der Form von reflektierten Strahlen (RR1, RR2) reflektiert werden,
- Bilden, mit den reflektierten Strahlen, von zumindest einem Bild der Ringfläche des Behältnisses auf einem zweidimensionalen photoelektrischen Sensor (18),
wobei das Verfahren derart ist, dass:
- das einfallende Lichtbündel radiale einfallende Lichtstrahlen umfasst, die in radialen Ebenen enthalten sind, die um 360° um die theoretische Mittelachse (A1) verteilt sind,
- das Verfahren die Betrachtung der Ringfläche (16), einschließlich des Innenrandes der Ringfläche, von oben durch ein optisches System (24, 261) entlang eines ersten umlaufenden Betrachtungsfeldes umfasst, das die Ringfläche (16) entlang erster radialer Betrachtungsstrahlen betrachtet, die in radialen Ebenen enthalten sind, welche die theoretische Mittelachse (A1) beinhalten, die um 360° um die theoretische Mittelachse (A1) verteilt sind, wobei diese Betrachtung radial von außen in Bezug auf die Ringfläche erfolgt, wobei das erste umlaufende Betrachtungsfeld einen ersten Betrachtungshöhenwinkel (Y1) in Bezug auf eine Ebene senkrecht zu der theoretischen Mittelachse (A1) aufweist, um auf dem zweidimensionalen photoelektrischen Sensor (18) in einem ersten ringförmigen Bereich des Sensors zu verbleiben, um einen ersten zweidimensionalen digitalen Bildbereich (ZI1) zu bilden:
∘ wobei bestimmte der einfallenden Lichtstrahlen, die entlang des ersten umlaufenden Betrachtungsfeldes (Y1) durch die Ringfläche reflektiert werden, in dem ersten ringförmigen Bildbereich (ZI1) einen Hauptkreis (CP1) bilden, der einem Abschnitt der Ringfläche entspricht, der aus Punkten gebildet ist, die eine Normale darstellen, sodass es zumindest einen einfallenden Strahl gibt, der durch Spiegelreflexion an diesem Punkt nach Reflexion auf einer ersten primären Reflexionsfläche (261) entlang eines Betrachtungsstrahls des ersten umlaufenden Betrachtungsfeldes reflektiert wird,
∘ und schließlich Strahlen, die entlang des ersten umlaufenden Betrachtungsfeldes (Y1) durch den Innenrand der Ringfläche oder durch einen Fehler an der Stelle des Innenrandes reflektiert werden, in dem ersten Bildbereich zumindest einen sekundären Kreisbogen (CS1) bilden, der konzentrisch zu dem Hauptkreis und in Bezug auf diesen radial versetzt ist,
und derart, dass das Verfahren umfasst:
∘ Ermitteln, in dem ersten Bildbereich, des Hauptkreises (CP1),
∘ Ermitteln, in dem ersten Bildbereich, eines möglichen sekundären Kreisbogens (CS1), der konzentrisch zu dem Hauptkreis und in Bezug auf diesen radial versetzt ist,
- und derart, dass, wenn entlang des ersten umlaufenden Betrachtungsfeldes, das den ersten Betrachtungshöhenwinkel (Y1) aufweist, Störstrahlen erscheinen, die durch einen Abschnitt (S') einer Wand des Rings verschieden von der Ringfläche (16) und ihres Innenrandes reflektiert werden, die in dem ersten Bildbereich (ZI1) Störbilder bilden, der Betrachtungshöhenwinkel (Y1) in einen anderen Wert (γ2) geändert wird.

2. Verfahren nach Anspruch 1, **dadurch gekennzeichnet, dass** der Betrachtungshöhenwinkel (γ1, γ2) geändert wird, indem zumindest eine Komponente (261, 262) des optischen Systems (24) ersetzt wird.

3. Verfahren nach einem der Ansprüche 1 oder 2, **dadurch gekennzeichnet, dass**:
- das Verfahren die Betrachtung der Ringfläche (16) sowie des Innenrandes der Ringfläche von oben durch ein optisches System (24, 262) entlang eines zweiten umlaufenden Betrachtungsfeldes umfasst, das den Ring (16) entlang zweiter radialer Betrachtungsstrahlen betrachtet, die in radialen Ebenen enthalten sind, welche die theoretische Mittelachse (A1) beinhalten, die um 360° um die theoretische Mittelachse (A1) verteilt sind, wobei das zweite umlaufende Betrachtungsfeld einen zweiten Betrachtungshöhenwinkel (γ2) in Bezug auf eine Ebene senkrecht zu der theoretischen Mittelachse (A1) aufweist, der sich aber von dem ersten Betrachtungshöhenwinkel (γ1) unterscheidet, um auf demselben zweidimensionalen photoelektrischen Sensor in einem zweiten ringförmigen Bereich des Sensors (ZI2) zu verbleiben, um einen zweiten zweidimensionalen digitalen Bildbereich (ZI2) zu bilden:
∘ wobei bestimmte der einfallenden Lichtstrahlen, die entlang des zweiten umlaufenden Betrachtungsfeldes (Y2) durch die Ringfläche reflektiert werden, in dem zweiten Bildbereich einen Hauptkreis (CP2) bilden,
∘ und schließlich Strahlen, die entlang des zweiten umlaufenden Betrachtungsfeldes (Y2) durch den Innenrand der Ringfläche oder durch einen Fehler an der Stelle des Innenrandes reflektiert werden, in dem zweiten Bildbereich zumindest einen sekundären Kreisbogen (CS2) bilden, der konzentrisch zu dem Hauptkreis (CP2) und in Bezug auf diesen radial versetzt ist,
und dass das Verfahren umfasst:
∘ Ermitteln, in dem zweiten Bildbereich (ZI2), des Hauptkreises (CP2),
∘ Ermitteln, in dem zweiten Bildbereich (ZI2), eines möglichen sekundären Kreisbogens (CS2), der konzentrisch zu dem Hauptkreis (CP2) und in Bezug auf diesen radial versetzt ist.

4. Verfahren zur Bestimmung nach Anspruch 3, **dadurch gekennzeichnet, dass** es aufweist:
• gleichzeitige Betrachtung, durch das optische System (24, 261, 262), entlang des ersten umlaufenden Betrachtungsfeldes, das den ersten Betrachtungswinkel (γ1) aufweist, und entlang des zweiten umlaufenden Betrachtungsfeldes, das den zweiten Betrachtungswinkel (Y2) aufweist,
• Regeln durch relative Verschiebung entlang der theoretischen Mittelachse einer relativen Position des optischen Systems (24) in Bezug auf die Ringfläche (16) des Behältnisses, um die Bildung eines zweidimensionalen Bildes der Ringfläche des Behältnisses und ihres Innenrandes entweder in dem ersten Bildbereich (Z1) entsprechend der Betrachtung entlang des ersten umlaufenden Betrachtungsfeldes (Y1) oder in dem zweiten Bildbereich (Z2) entsprechend der Betrachtung entlang des zweiten umlaufenden Betrachtungsfeldes (Y2) zu ermöglichen,
• Ermitteln eines Hauptkreises (CP1, CP2), dann zumindest eines sekundären Kreisbogens (CS1, CS2), entweder in dem ersten Bildbereich (ZI1) oder in dem zweiten Bildbereich (ZI2).

5. Verfahren zur Bestimmung nach Anspruch 3 oder Anspruch 4, **dadurch gekennzeichnet, dass** es aufweist:
- gleichzeitige Betrachtung der Ringfläche (16), einschließlich des Innenrandes der Ringfläche, durch das optische System (24, 261, 262), entlang des ersten umlaufenden Betrachtungsfeldes und entlang des zweiten umlaufenden Betrachtungsfeldes,
- gleichzeitiges Bilden, anhand der reflektierten Strahlen, die entlang des ersten und des zweiten umlaufenden Betrachtungsfeldes gesammelt werden, mit Hilfe des optischen Systems (24, 261, 262), eines zweidimensionalen Bildes der Ringfläche des Behältnisses und ihres Innenrandes gleichzeitig in dem ersten Bildbereich (ZI1) entsprechend der Betrachtung entlang des ersten umlaufenden Betrachtungsfeldes (γ1) und in dem zweiten Bildbereich (ZI2) entsprechend der Betrachtung entlang des zweiten umlaufenden Betrachtungsfeldes (γ2), auf demselben zweidimensionalen Sensor (18), wobei der erste Bildbereich und der zweite Bildbereich getrennt sind.

6. Verfahren nach einem der Ansprüche 4 oder 5, **dadurch gekennzeichnet, dass** es aufweist:
- Auswählen, für zumindest eine Reihe an Behältnissen derselben Art, eines bevorzugten Bildbereichs aus dem ersten und dem zweiten Bildbereich (ZI1, ZI2),
- Ermitteln, für die Reihe an Behältnissen, in dem bevorzugten Bildbereich, des entsprechenden durchgehenden Hauptkreises und des sekundären Kreisbogens.

7. Verfahren nach einem der Ansprüche 3 bis 6, **dadurch gekennzeichnet, dass** es das Ermitteln, für zumindest ein Behältnis, in dem ersten Bildbereich (ZI1), eines ersten durchgehenden Hauptkreises (CP1) und eines ersten sekundären Kreisbogens (CS1), die diesem Behältnis entsprechen, und, in dem zweiten Bildbereich (ZI2), eines zweiten durchgehenden Hauptkreises (CP2) und eines zweiten sekundären Kreisbogens (CS2), die diesem Behältnis entsprechen, beinhaltet.

8. Verfahren nach einem der Ansprüche 4 bis 6, **dadurch gekennzeichnet, dass** es das Ermitteln, für jedes Behältnis von zumindest einer Reihe an Behältnissen derselben Art, in dem ersten Bildbereich (ZI1), eines ersten durchgehenden Hauptkreises (CP1) und eines ersten sekundären Kreisbogens (CS1), die einem Behältnis entsprechen, und, in dem zweiten Bildbereich (ZI2), eines zweiten durchgehenden Hauptkreises (CP2) und eines zweiten sekundären Kreisbogens (CS2), die diesem Behältnis entsprechen, beinhaltet.

9. Verfahren zur Bestimmung nach einem der vorhergehenden Ansprüche, **dadurch gekennzeichnet, dass** das Bilden des zweidimensionalen Bildbereichs (ZI1, ZI2) das optische Bilden eines zweidimensionalen Bildes (CP1, CP2) vollständig und durchgehend um 360° um die theoretische Mittelachse (A1) der Ringfläche (16) auf demselben Sensor (18) einschließt.

10. Verfahren zur Bestimmung nach einem der vorhergehenden Ansprüche, **dadurch gekennzeichnet, dass** das Verfahren das Bestimmen des Vorhandenseins eines Fehlers umfasst, wenn ein radialer Querabstand (D1, D2) zwischen einem sekundären Kreisbogen (CS1, CS2) und dem nächsten Hauptkreis (CP1, CP2) für zumindest einen Strahl einen Schwellenwert überschreitet.

11. Verfahren zur Bestimmung nach einem der vorhergehenden Ansprüche, **dadurch gekennzeichnet, dass** das Verfahren umfasst:
▪ Bestimmen eines radialen Querabstands zwischen einem sekundären Kreisbogen und dem nächsten Hauptkreis und
▪ Bestimmen des Vorhandenseins eines Fehlers, wenn der radiale Querabstand für zumindest einen Strahl einen Schwellenwert überschreitet.

12. Verfahren zur Bestimmung nach einem der Ansprüche 5, 7 oder 8, **dadurch gekennzeichnet, dass** das Verfahren umfasst:
- Ermitteln, in dem ersten Bildbereich (ZI1), eines ersten Hauptkreises (CP1) und eines ersten sekundären Kreisbogens (CS1), und Bestimmen eines radialen Querabstands (D1) zwischen den beiden,
- Ermitteln, in dem zweiten Bildbereich (ZI2), eines zweiten Hauptkreises (CP2) und eines zweiten sekundären Kreisbogens (CS2), und Bestimmen eines radialen Querabstands (D2) zwischen den beiden,
- Zuordnen des ersten und des zweiten sekundären Kreisbogens, die jeweils in dem ersten und dem zweiten Bildbereich gefunden werden, als die zwei Bilder, entlang des ersten und des zweiten umlaufenden Betrachtungsfeldes, eines gleichen Fehlers,
- Bestimmen durch Kombination der radialen Querabstände (D1, D2), die für den ersten und den zweiten sekundären Kreisbogen in den zwei Bildbereichen (ZI1, ZI2) gemessen werden, um einen Wert zu bestimmen, der von einer relativen Höhe (dZ) des Fehlers in Bezug auf die Ringfläche abhängt,
- Bestimmen des Vorhandenseins eines Fehlers, wenn der Wert für zumindest einen Bogenabschnitt einen Schwellenwert überschreitet.

13. Vorrichtung zum Prüfen des Vorhandenseins eines Glasfehlers an der Stelle eines Innenrandes einer Ringfläche (16) eines Glasbehältnisses (14), wobei die Ringfläche als theoretische Geometrie eine Rotationsfläche um eine theoretische Mittelachse (A1) aufweist, der Art, in der die Vorrichtung (10) einen Installationsbereich (Z) einer Ringfläche (16) eines zu prüfenden Behältnisses aufweist, wobei dieser Installationsbereich eine Installationsachse (A'1) aufweist, der Art, umfassend:
- ein Beleuchtungssystem (28, 28'), das über dem Installationsbereich angeordnet und ausgelegt ist, um ein einfallendes Lichtbündel bereitzustellen, das radiale Strahlen beinhaltet, die in zumindest einer radialen Ebene enthalten sind, welche die Installationsachse (A'1) beinhaltet, wobei die einfallenden radialen Strahlen von der Installationsachse (A'1) auf Höhe ihres Einfalls auf die Ringfläche abweichen,
- einen Sensor (18), der mit einer Bildanalyseeinheit verbunden ist,
- ein optisches System (24, 261, 262), das über dem Installationsbereich angeordnet, zwischen den Installationsbereich und den Sensor (18) eingefügt und ausgelegt ist, um auf dem Sensor (18) ein Bild (CP1, CP2) der zu prüfenden Ringfläche (16) zu bilden, die in dem Installationsbereich platziert ist,
wobei die Vorrichtung derart ist, dass:
- der Sensor ein zweidimensionaler Bildsensor ist,
- das einfallende Lichtbündel ein Bündel ist, das radiale einfallende Lichtstrahlen umfasst, die in radialen Ebenen enthalten sind, welche die Installationsachse (A'1) beinhalten, und um 360° um die Installationsachse (A'1) verteilt sind,
- das optische System zumindest eine erste primäre Reflexionsfläche (261) in einem vorgelagerten Sichtfeld des Sensors beinhaltet, wobei die erste primäre Reflexionsfläche (261) eine Rotationsfläche ist, die auf der Installationsachse (A'1) ausgerichtet, in Richtung der Installationsachse gedreht und angeordnet ist, um direkt oder indirekt in Richtung des Sensors (18) Lichtstrahlen, die von dem Installationsbereich ausgehen, entlang radialer Ebenen zu reflektieren, welche die Installationsachse (A'1) beinhalten, und entlang eines ersten umlaufenden Betrachtungsfeldes, das einen ersten Betrachtungshöhenwinkel (Y1) in Bezug auf eine Ebene senkrecht zu der Installationsmittelachse (A'1) aufweist,
- die Vorrichtung zumindest eine zweite primäre Reflexionsfläche (262) in dem vorgelagerten Sichtfeld des Sensors (18) beinhaltet, wobei die zweite primäre Reflexionsfläche eine Rotationsfläche ist, die auf der Installationsachse ausgerichtet, in Richtung der Installationsachse gedreht und angeordnet ist, um direkt oder indirekt in Richtung des Sensors (18) Lichtstrahlen, die von dem Installationsbereich ausgehen, entlang radialer Ebenen zu reflektieren, welche die Installationsachse (A'1) beinhalten, und entlang eines zweiten umlaufenden Betrachtungsfeldes, das einen zweiten Betrachtungshöhenwinkel (γ2) in Bezug auf eine Ebene senkrecht zu der Installationsmittelachse (A'1) aufweist, wobei sich der zweite Betrachtungshöhenwinkel von dem ersten Betrachtungshöhenwinkel unterscheidet, wobei die erste primäre Reflexionsfläche und die zweite primäre Reflexionsfläche beide in Abschnitten sind, die getrennt von dem vorgelagerten Sichtfeld des Sensors sind, und
- die erste primäre Reflexionsfläche (261) und die zweite Reflexionsfläche (262) für den Sensor (18) jeweils einen ersten nachgelagerten Sichtfeldabschnitt (CAV1) und einen zweiten nachgelagerten Sichtfeldabschnitt (CAV2) bestimmen, die sich in dem Prüfbereich überschneiden.

14. Vorrichtung nach Anspruch 13, **dadurch gekennzeichnet, dass** die erste primäre Reflexionsfläche (261) und die zweite primäre Reflexionsfläche (262) kegelstumpfförmig gewinkelt mit unterschiedlichen Spitzenwinkeln sind.

15. Vorrichtung nach einem der Ansprüche 13 oder 14, **dadurch gekennzeichnet, dass** die erste primäre Reflexionsfläche (261) und die zweite primäre Reflexionsfläche (262) entlang einer radialen Schnittebene, welche die Installationsmittelachse (A'1) enthält, tangential zu einem Ellipsoid sind, von dem ein Fokus in der Mitte der Eintrittspupille eines Objektivsystems (20) einer Kamera (19) ist, die den Bildsensor (18) umfasst, und von dem der zweite Fokus auf der Installationsmittelachse (A'1), auf der Höhe des Rings (12) des zu prüfenden Behältnisses angeordnet ist.

16. Vorrichtung nach einem der Ansprüche 13 bis 15, **dadurch gekennzeichnet, dass** das einfallende umlaufende Bündel auf einer gleichen radialen Ebene nichtparallele radiale Strahlen umfasst.

17. Vorrichtung nach einem der Ansprüche 13 bis 16, **dadurch gekennzeichnet, dass** das Beleuchtungssystem eine zentrale Lichtquelle (28), die zumindest teilweise in einer zylindrischen Drehhülse enthalten ist, die als Achse die Installationsachse (A'1) und als Durchmesser den Durchmesser des Innenrandes (15) der zu prüfenden Ringfläche (16) aufweist, oder eine ringförmige Rotationslichtquelle (28') beinhaltet, die auf der Installationsachse (A'1) ausgerichtet ist, die radiale einfallende Lichtstrahlen erzeugt, die auf die Ringfläche (16) treffen, nachdem sie die Installationsachse (A'1) geschnitten haben.

18. Prüfstrecke (200) für Behältnisse (14), die eine Ringfläche (16) aufweisen, der Art, bei der die Behältnisse (14) auf einer Förderstrecke von einem Förderer (210) verschoben werden, der die Behältnisse (14) in einer horizontalen Verschiebungsrichtung senkrecht zu einer theoretischen Mittelachse (A1) der Behältnisse 14 transportiert, die somit ihre Ringfläche (16) in einer nach oben gedrehten horizontalen Ebene präsentieren, **dadurch gekennzeichnet, dass** die Installation eine Vorrichtung (10) nach einem der Ansprüche 13 bis 17 beinhaltet, die zur Installation mit ihrer Installationsachse (A'1) in vertikaler Position angeordnet ist, sodass das Betrachtungsfeld und das einfallende Lichtbündel nach unten orientiert sind, in Richtung des Installationsbereichs (Z), der sich zwischen der Vorrichtung und einem Transportelement des Förderers (212) befindet.

## Claims

1. - A determination process of the presence of a glass wire-edge at the site of an internal edge (**15**) of a ring surface (**16**) of a ring of a glass container (**14**), the ring surface having as theoretical geometry a surface of revolution around a theoretical central axis (**A1**), of the type comprising:
- lighting of the ring surface (**16**) of the container from above, by means of an incident light beam comprising radial incident light rays (**RI**) contained in at least one radial plane containing the theoretical central axis (**A1**), said radial incident rays moving away from the theoretical central axis (**A1**) in the region of their incidence on the ring surface, and some of the radial rays of the incident light beam being reflected by specular reflection on the ring surface (**16**), in the form of reflected rays (**RR1, RR2**);
- formation, with the reflected rays, of at least one image of the ring surface of the container, on a bidimensional photoelectric sensor **(18),**
**the process being such that:**
- the incident light beam comprises radial incident light rays contained in radial planes distributed at 360° around the theoretical central axis (**A1**);
- the process comprises observation of the ring surface (**16**), including the internal edge of the ring surface, from above, by an optical system (**24**, **261**), according to a first peripheral observation field which observes the ring surface (**16**) according to first radial observation rays which are contained in radial planes containing the theoretical central axis (Al), which are distributed at 360° around the theoretical central axis (**A1**), this observation being carried out radially from outside relative to the ring surface (**16**), the first peripheral observation field having a first observation elevation angle (**γ1**) relative to a plane perpendicular to the theoretical central axis (**A1**), so as to collect on the bidimensional photoelectric sensor (**18**), in a first annular zone of the sensor, to form a first bidimensional digital image zone (**ZI1**):
∘ some of the incident light rays reflected according to the first peripheral observation field (**γ1**) by the ring surface, forming in said first annular image zone (**ZI1**) a principal circle (**CP1**) corresponding to a portion of the ring surface (**16**) formed by points which have a normal such that there is at least one incident ray which, by specular reflection at this point, is reflected, after reflection on a first primary reflection surface (**261**), according to a ray of observation of the first peripheral field of observation;
∘ and, possibly, rays reflected according to the first peripheral observation field (**γ1**) by the internal edge of the ring surface or by a wire-edge at the site of the internal edge, forming in said first image zone at least one secondary arc of a circle (**CS1**) concentric to the so-called principal circle, and offset radially relative to the latter;
and such that the process comprises:
∘ search in said first image zone for the so-called principal circle (**CP1**);
∘ search in said first image zone for any secondary arc of a circle (**CS1**) concentric to the so-called principal circle and offset radially relative to the latter.
and such that, when parasite rays appear according to the first peripheral observation field having the first observation elevation angle (**γ1**), said parasite rays being reflected by a portion (**S'**) of a wall of the ring distinct from the ring surface (**16**) and its internal edge, said parasite rays forming parasite images in the first image zone (**ZI1**), the observation elevation angle (**γ1**) is modified into a different value (**γ2**).

2. - The process according to claim **1**, **characterized in that** the observation elevation angle (**γ1**, **γ2**) is modified by replacing at least one component (**261, 262)** of the optical system (**24**).

3. - The process according to any one of claims **1** to **2**, **characterized in that**:
- the process comprises observation of the ring surface (**16**), including the internal edge of the ring surface, from above, by an optical system (**24**, **262**), according to a second peripheral observation field which observes the ring (16) according to second radial observation rays which are contained in radial planes containing the theoretical central axis (**A1**), which are distributed at 360° around the theoretical central axis (**A1**), the second peripheral observation field having a second observation elevation angle (**γ2**) relative to a plane perpendicular to the theoretical central axis (**A1**), but different to the first observation elevation angle (**γ1**), so as to collect on the same bidimensional photoelectric sensor, in a second annular zone of the sensor (**ZI2**), to form a second bidimensional digital image zone (**ZI2**):
∘ some of the incident light rays reflected according to the second peripheral observation field (**γ2**) by the ring surface, forming in said second image zone a principal circle (**CP2**);
∘ and, possibly, rays reflected according to the second peripheral observation field (**γ2**) by the internal edge of the ring surface or by a wire-edge at the site of the internal edge, forming in said second image zone, at least one secondary arc of a circle (**CS2**), concentric to the principal circle (**CP2**), and offset radially relative to the latter;
and **in that** the process comprises:
∘ search, in said second image zone (**ZI2**), for the principal circle (**CP2**);
∘ search, in said second image zone (**ZI2**), for any secondary arc of a circle (**CS2**) concentric to the principal circle (**CP2**) and offset radially relative to the latter.

4. - The determination process according to claim **3**, **characterized in that** it comprises:
• simultaneous observation by the optical system (**24, 261, 262**) according to the first peripheral observation field having the first angle of observation (**γ1**) and according to the second peripheral observation field having the second angle of observation (**γ2**);
• adjustment by relative translation according to the theoretical central axis of a position relative of the optical system (**24**) relative to the ring surface (**16**) of the container, so as to allow formation of a bidimensional image of the ring surface of the container and of its internal edge either in the first image zone (**Z1**) corresponding to the observation according to the first peripheral observation field (**γ1**) or in the second image zone (**Z2**) corresponding to the observation according to the second peripheral observation field (**γ2**);
• search of a principal circle (**CP1**, **CP2**) then at least one secondary arc of a circle (**CS1**, **CS2**), either in the first image zone (**ZI1**) or in the second image zone (**ZI2**).

5. - The determination process according to claim **3** or claim **4**, **characterized in that** it comprises:
- simultaneous observation of the ring surface (**16**), including the internal edge of the ring surface, by the optical system (**24**, **261**, **262**), according to the first peripheral observation field and according to the second peripheral observation field;
- simultaneous formation, from the reflected rays collected according to the first and second peripheral observation fields, by means of the optical system (**24**, **261**, **262**), of a bidimensional image of the ring surface of the container and of its internal edge simultaneously at the same time in the first image zone (**ZI1**) corresponding to the observation according to the first peripheral observation field (**γ1**) and in the second image zone (**ZI2**) corresponding to the observation according to the second peripheral observation field (**γ2**), on the same bidimensional sensor (**18**), the first image zone and the second image zone being disjointed.

6. - The process according to any one of claims **4** or **5**, **characterized in that** it comprises:
- selection for at least one series of containers of same type of a preferred image zone from the first and the second image zone (**ZI1**, **ZI2**);
- search for said series of containers in the preferred image zone of the corresponding principal continuous circle and of the secondary arc of a circle.

7. - The process according to any one of claims **3** to **6**, **characterized in that** it comprises the search, for at least one container, in the first image zone (**ZI1**), of a first principal continuous circle (**CP1**) and of a first secondary arc of a circle (**CS1**) corresponding to this so-called container, and in the second image zone (**ZI2**), of a second principal continuous circle (**CP2**) and of a second secondary arc of a circle (**CS2**) corresponding to this so-called container.

8. - The process according to any one of claims **4** to **6**, **characterized in that** it comprises the search, for each container of at least one series of containers of same type, in the first image zone (**ZI1**), of a first principal continuous circle (**CP1**) and of a first secondary arc of a circle (**CS1**) corresponding to a container, and in the second image zone (**ZI2**), of a second principal continuous circle (**CP2**) and of a second secondary arc of a circle (**CS2**) corresponding to said container.

9. - The determination process according to any one of the preceding claims, **characterized in that** formation of the bidimensional image zone (**ZI1, ZI2**) includes the optical formation of a complete and continuous bidimensional image (**CP1, CP2**) at 360° around the theoretical central axis (**A1**) of the ring surface (**16**) on the same sensor (**18**).

10. - The determination process according to any one of the preceding claims, **characterized in that** the process comprises determination of the presence of a wire-edge when a radial gap distance (**D1**, **D2**), between a secondary arc of a circle (**CS1, CS2**) and the closest principal circle (**CP1, CP2**), exceeds a threshold value for at least one ray.

11. - A method of determining according to any of the preceding claims, **characterised in that** the method comprises:
- determining a radial gap distance between a secondary circle arc and the nearest main circle; and
- determining whether a burr is present when said radial gap distance exceeds, for at least one radius, a threshold value.

12. - The determination process according to any one of claims **5**, **7** or **8**, **characterized in that** the process comprises:
- search in the first image zone (**ZI1**), of a first principal circle (**CP1**) and of a first secondary arc of a circle (**CS1**) and the determination of a radial gap distance (**D1**) between the two;
- search in the second image zone (**ZI2**), of a second principal circle (**CP2**) and of a second secondary arc of a circle (**CS2**), and the determination of a radial gap distance (**D2**) between the two;
- matching of the first and of the second secondary arc of a circle found respectively in the first and the second image zone as being the two images, according to the first and second peripheral observation field, of a same wire-edge;
- determination by combination of radial gap distances (**D1**, **D2**) measured for said first and second secondary arcs of a circle in the two image zones (**ZI1, ZI2**) so as to determine a value dependent on a relative height (**dZ**) of the wire-edge relative to the ring surface;
- determination of the presence of a wire-edge when the value exceeds for at least one portion of an arc a threshold value.

13. - The inspection device of the presence of a glass wire-edge at the site of an internal edge of a ring surface (**16**) of a glass container (**14**), the ring surface having as theoretical geometry a surface of revolution around a theoretical central axis (**A1**), of the type in which the device (**10**) has an installation zone (**Z**) of a ring surface (**16**) of a container to be inspected, this installation zone having an axis of installation (**A'1**), of the type comprising:
- a lighting system (**28**, **28'**) arranged above the installation zone and capable of providing an incident light beam comprising radial rays contained in at least one radial plane containing the axis of installation (**A'1**), said radial incident rays moving away from the axis of installation (**A'1**) in the region of their incidence on the ring surface;
- a sensor (**18**), connected to an image-analysis unit;
- an optical system (**24, 261, 262**) arranged above the installation zone, interposed between the installation zone and the sensor (**18**), and capable of forming on the sensor (**18**) an image (**CP1, CP2**) of the ring surface (**16**) to be inspected (**14**) placed in the installation zone;
the device being such that:
- the sensor is a bidimensional image sensor;
- the incident light beam is a beam comprising radial incident light rays contained in radial planes containing the axis of installation (**A'1**) and distributed at 360° around the axis of installation (**A'1**);
- the optical system comprises at least one first primary reflection surface (**261**) in an upstream field of vision of the sensor, the first primary reflection surface (**2**) being a surface of revolution centred on the axis of installation (**A'1**), turned towards the axis of installation, and arranged to reflect, directly or indirectly, in the direction of the sensor (**18**), light rays coming from the installation zone according to radial planes containing the axis of installation (**A'1**) and according to a first peripheral observation field having a first observation elevation angle (**γ1**) relative to a plane perpendicular to the central axis of installation (**A'1**);
- the device comprises at least one second primary reflection surface (**262**) in the upstream field of vision of the sensor (**18**), the second primary reflection surface being a surface of revolution centred on the axis of installation, turned towards the axis of installation and arranged to directly or indirectly reflect in the direction of the sensor (**18**), light rays coming from the installation zone according to radial planes containing the axis of installation (**A'1**) and according to a second peripheral observation field having a second observation elevation angle (**γ2**) relative to a plane perpendicular to the central axis of installation (**A'1**), said second observation elevation angle being different to the first observation elevation angle, the first primary surface and the second primary reflection surface, both being in disjointed portions of the upstream field of vision of the sensor; and
- the first primary reflection surface (**261**) and the second reflection surface (**262**) determine for the sensor (**18**) respectively a first portion of downstream field of vision (**CAV1**) and a second portion of downstream field of vision (**CAV2**) which overlap in the inspection zone.

14. - The device according to any one of claims **13**, **characterized in that** the first primary reflection surface (**261**) and the second primary reflection surface (**262**) are in the shape of truncated cones having different angles at the apex.

15. - The device according to any one of claims **13** to **14**, **characterized in that** the first primary reflection surface (**261**) and the second primary reflection surface (**262**) are, according to a radial intersecting plane containing the central axis of installation (**A'1**), tangential to an ellipsoid whereof a focus is at the centre of the entry pupil of a lens system (**20**) of a camera (**19**) comprising the image sensor (**18**) and whereof the second focus is arranged on the central axis of installation (**A'1**), in the region of the ring (**12**) of the container to be inspected.

16. - The device according to any one of claims **13** to **15**, **characterized in that** the incident peripheral beam comprises, in the same radial plane, non-parallel radial rays.

17. - The device according to any one of claims **13** to **16**, **characterized in that** the lighting system comprises a central light source (**28**) at least in part contained in an envelope cylindrical in revolution having as axis the axis of installation (**A'1**) and as diameter the diameter of the internal edge (**15**) of the ring surface (**16**) to be inspected, or a light source (**28'**) annular in revolution, centred on the axis of installation (**A'1**), which generates radial incident light rays which impact the ring surface (**16**) after having intersected the axis of installation (**A'1**).

18. - An inspection line (**200**) of containers (**14**) presenting a ring surface (**16**), of the type in which containers (**14**) are moved on a conveying line by a conveyor (**210**) which transports the containers (**14**) according to a horizontal displacement direction perpendicular to a theoretical central axis (**A1**) of the containers **14** which present their ring surface (**16**) in a horizontal plane turned upwards, **characterized in that** the installation comprises a device (**10**) according to any one of claims **13** to **17**, which is arranged on the installation with its axis of installation (**A'1**) in a vertical position, such that the observation field and the incident light beam are oriented downwards, towards the installation zone (**Z**) which is located between the device and a transport member of the conveyor (**212**).
